(19) **Europäisches Patentamt**
**European Patent Office**
**Office européen des brevets**

(11) **EP 4 428 636 A2**

(12) **EUROPEAN PATENT APPLICATION**

(43) Date of publication:
**11.09.2024  Bulletin 2024/37**

(21) Application number: **23211728.3**

(22) Date of filing: **23.11.2023**

(51) International Patent Classification (IPC):
**G05B 13/04** [(2006.01)]   **B25J 9/16** [(2006.01)]

(52) Cooperative Patent Classification (CPC):
**G05B 13/04; B25J 9/1664; B25J 9/1671;**
G05B 2219/39087; G05B 2219/40474;
G05B 2219/40515

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.11.2022  US 202218070335**

(71) Applicant: **ASCon Systems Holding GmbH**
**70563 Stuttgart (DE)**

(72) Inventor: **Grefen, Kilian**
**71701 Schwieberdingen (DE)**

(74) Representative: **Hoffmann Eitle**
**Patent- und Rechtsanwälte PartmbB**
**Arabellastraße 30**
**81925 München (DE)**

Remarks:
Claims
23,24,27,35,40,42,43,48,50,51,58,67,68,71,79,84,8
6 & 87 are deemed to be abandoned due to
non-payment of the claims fees (Rule 45(3) EPC).

(54)   **AUTOMATED CONTROL PROCESS GENERATION**

(57)   The present invention relates to the field of automated control process generation for control of a cyber-physical system. In more detail the present invention relates to a method of specifying a control process for a cyber-physical system and a related control process specifying engine. Control process specification is achieved by specifying at least one control process observation target to be reached by the control process. Then, according to the present invention a method of generating at least one control process instruction for the specified control process and a related control process experiment execution engine are used for automated control process generation through execution of control process experiments.

Fig. 8

EP 4 428 636 A2

**Description**

FIELD OF INVENTION

The present invention relates to the field of automated control process generation for control of a cyber-physical system. In more detail the present invention relates to a method of specifying a control process for a cyber-physical system, method of generating at least one control process instruction for the specified control process, a control process specification engine, and a control process experiment execution machine.

TECHNICAL BACKGROUND

For movement in a two- or three-dimensional space there are known motion planning methods which provide a trajectory planning from a start constellation to a target constellation. Also known are planning methods for collision free occupation of a pose in a kinematic having n-dimensional degrees of freedom where a complete movement space of the kinematic is divided into configurations consisting of position and pose, e.g., collision free configurations, target configurations, barrier configurations and hazardous constellations.

Here global path planning algorithms require a prior knowledge on the complete operative environment of the kinematics or robot. By evaluating all possible configurations there is found a collision free path from the start configuration towards the target configuration, e.g., by using Rapidly Exploring Random Tree RRT.

Further, local path planning algorithms solely use situational knowledge on the close context to find a trajectory from the actual configuration towards the target configuration. These path planning algorithms, e.g., probabilistic roadmap PRM, a predominantly divided into two phases. A first relates to a preprocessing phase for generation of options for collision free configurations and a second phase relates to query phase where the start configuration and optional collision free configurations are respectively connected via different paths. Subsequent hereto an optimum path is identified through a shortest path algorithm, e.g., the Dijkstra algorithm.

Yet another algorithm for path planning is the evolutionary artificial potential field EAPF method using a combination of synthetically generated attractive and repulsive forces for configuration planning. The movement target exercises an attractive force and barriers exercise repulsive forces. However, the evolutionary artificial potential field method may get trapped in local minima.

From the above, today an automatic generation of a control process for control of systems is not viable, in particular due to non-availability of a general approach to describe a target constellation that a system must reach to reach a control process target. Another reason is non-availability of a general approach for describing a transition from an arbitrary start constellation towards the target constellation in a system which is aligned to a control process target.

SUMMARY OF INVENTION

In view of the above, the technical object of the present invention is to achieve an automation of control process generation.

According to a first aspect of the present invention the object of the present invention is achieved by a method of specifying a control process for a cyber-physical system comprising at least one controllable and observable cyber-physical object. Here at least one functionality of the at least one cyber-physical object is modelled by a parametrized function being assigned to the at least one cyber-physical object and each parameter of the parametrized function represents a degree of freedom for control of the cyber-physical object and has a predetermined value range.

According the first aspect the method of specifying a control process comprises a first step of specifying at least one object observation target the for at least one cyber-physical object as a dedicated parameter observation with respect to at least one parametrized function being assigned to the at least one cyber-physical object, a second step of specifying at least one control process observation target for the control process by selecting at least one object observation target of at least one cyber-physical object for assignment to the process observation target, and a third step of assigning a sequential order onto the at least one control process observation target.

According to a second aspect of the present invention the object outlined above is achieved by a method of generating at least one control process instruction for a control process to be generated for a set of controllable and observable cyber-physical objects operated in a cyber-physical system.

According to the second of the present invention the method of generating at least one control process instruction for a control process comprises a first step of selecting at least one control process observation target in the control process as an actual control process observation target and a second step of conducting a control process experiment to promote a transition from an actual control process observation towards the actual control process observation target by execution of at least one control process experimental step.

According to the second aspect of the present invention the second step of conducting a control process experiment comprises a third step of executing a parameter value variation with respect to at least one parametrized function representing a degree of freedom for control of a cyber-physical object and a fourth step of submitting the at least one parameter value variation to a control process test environment and to receive a dedicated parameter observation in response to the submitted at least one parameter value variation from the control process test environment.

According to the second aspect of the present invention the after receipt of an experimental result from the control process test environment the method of generating at least one control process instruction comprises a fifth step of evaluating the dedicated parameter observation with respect to a progress of the control process experiment towards the actual control process observation target using an artificial potential objective function, a sixth step of generating at least one control process instruction from the parameter value variation upon a progress of the control process experiment, and a seventh step to control the control process experiment according to a predetermined control process experiment strategy.

According to third aspect of the present invention the objectives outlined above is achieved by a control process specification engine for specifying a control process for a cyber-physical system comprising at least one controllable and observable cyber-physical object. Here, at least one functionality of the at least one cyber-physical object is modelled by a parametrized function being assigned to the at least one cyber-physical object and each parameter of the parametrized function represents a degree of freedom for control of the cyber-physical object and has a predetermined value range.

According to the third aspect of the present invention the control process specification engine comprises a target specifying unit adapted to specify at least one object observation target the for at least one cyber-physical object as a dedicated parameter observation with respect to at least one parametrized function being assigned to the at least one cyber-physical object, adapted to specify at least one control process observation target for the control process by selecting at least one object observation target of at least one cyber-physical object for assignment to the process observation target, and adapted to assign a sequential order onto the at least one control process observation target.

According to a fourth aspect of the present invention the object outlined above is achieved by a control process experiment execution machine for generating at least one control process instruction for a control process to be generated for a set of controllable and observable cyber-physical objects operated in a cyber-physical system.

According to the fourth aspect the control process experiment execution machine comprises an observation target selection unit adapted to select at least one control process observation target in the control process as an actual control process observation target and a parameter variation unit adapted to execute a parameter value variation with respect to at least one parametrized function representing a degree of freedom for control of a cyber-physical object.

According to the fourth aspect the control process experiment execution machine comprises a control process test environment interface adapted to submit the at least one parameter value variation to a control process test environment and adapted to receive a dedicated parameter observation in response to the at least one parameter value variation from the control process test environment and an experiment controller adapted to control a control process experiment executing at least one control process experimental step to promote a transition from an actual control process observation towards the actual control process observation target.

According to the fourth aspect the control process experiment execution machine experiment controller comprises an experiment evaluation unit adapted to evaluate the dedicated parameter observation with respect to a progress of the control process experiment towards the actual control process observation target using an artificial potential objective function, a control process instruction generating unit adapted to generate at least one control process instruction from the parameter value variation upon a progress of the control process experiment, and an experiment control unit adapted to control the control process experiment according to a predetermined control process experiment strategy.


BRIEF DESCRIPTION OF DRAWING

In the following examples for illustrating various aspects of the present invention will be explained with reference to the drawing in which:

Fig. 1    shows a controllable and observable cyber-physical object, an activation pattern supplied to the cyber-physical object as process input, and an observation pattern generated by the cyber-physical object in response to the supplied activation pattern;

Fig. 2    shows a schematic diagram of a control process specification engine according to the present invention;

Fig. 3    shows a flowchart of operation for the control process specification engine shown in Fig. 2;

Fig. 4    shows a schematic diagram of control process experiment specifying unit according to the present invention;

Fig. 5      shows a flowchart of operation for the control process experiment specifying unit shown in Fig. 5;

Fig. 6      shows a relation between a behavioral state model of a cyber-physical object and dedicated parameter observations of at least one parametrized function being assigned to the at least one cyber-physical object to describe options for control thereof;

Fig. 7      shows an embedding of a control process experiment execution engine according to the present invention into a control process test environment and an interoperability between a control domain, a dataflow domain, and an observation domain;

Fig. 8      shows an overview on basic concepts underlying automatic control process generation to the present invention, in particular a formalized control process specification on the basis of control process observation targets and execution of control process experiments;

Fig. 9      shows a schematic diagram of a control process experiment execution engine according to the present invention;

Fig. 10      shows a flowchart of operation for the control process experiment execution engine shown in Fig. 9;

Fig. 11      shows a further detailed schematic diagram of the experiment controller shown in Fig. 9;

Fig. 12      shows a flowchart of operation for the experiment evaluation unit and the experiment control unit shown in Fig. 11;

Fig. 13      shows a motion conveyor forming part of a workpiece processing station to be controlled by an automatically generated control process according to the present invention;

Fig. 14      shows buffer module forming part of the workpiece processing station;

Fig. 15      shows a processing module forming part of the workpiece processing station;

Fig. 16      shows examples of process observation targets for an automized control process generation according to the present invention;

Fig. 17      shows examples of states and related parameters of parametrized functions, constraints, and control process observation targets as specified for an example of automized control process generation according to the present invention;

Fig. 18      shows examples for values of artificial potentials in relation to control process observation targets for the example of automized control process generation shown in Fig. 17;

Fig. 19      shows observation of parameters over time for the workpiece processing station shown in Fig. 16 to motivate dynamic parameter observation during control process experiment execution;

Fig. 20      shows execution of a control process experiment executed to reach the control process target observation TP1 shown in Fig. 17;

Fig. 21      shows termination of the control process experiment executed to reach the control process target observation TP1 shown in Fig. 17;

Fig. 22      shows execution of a first control process experiment executed to reach the control process target observation TP2 shown in Fig. 17;

Fig. 23      shows execution of a second control process experiment executed to reach the control process target observation TP2 shown in Fig. 17;

Fig. 24      shows execution of a third control process experiment executed to reach the control process target observation TP2 shown in Fig. 17;

Fig. 25 shows execution of a fourth control process experiment executed to reach the control process target observation TP2 shown in Fig. 17;

Fig. 26 shows execution of a fifth control process experiment executed to reach the control process target observation TP2 shown in Fig. 17;

Fig. 27 shows execution of a first control process experiment in executed to reach the control process target observation TP3 shown in Fig. 17;

Fig. 28 shows execution of a first control process experiment in executed to reach the control process target observation TP4 shown in Fig. 17; and

Fig. 29 shows a continuation scenario for a control process experiment that has reached an intermediate control process stage and that proceeds without control process progress to avoid constraint violation.

DETAILED DESCRIPTION OF INVENTION

In the following the present invention will be explained in detail with reference to the drawing. Here, it should be understood that such explanation is related to examples of the present invention only and not binding to the scope of the present invention as defined by the claims. As far as reference is made to specific functional units this is to be considered as example for the functionality such the functional units are clearly exchangeable as long as the same functionality is achieved, e.g., through implementation in software, hardware or any combination thereof.

In the most general sense automatic control process generation according to the present invention relies on formalized specification of control processes as basis for automized generation or equivalently synthesis thereof.

According to the present invention target constellations that a cyber-physical system must reach to reach during a control process are represented as control process observation targets which itself are specified via parameters of parametrized functions modelling functionality and representing options for control of controllable and observable cyber-physical objects operated in the cyber-physical systems.

According to the present invention - using the formalized specification of control process targets - then transitions from any arbitrary start constellation towards control process targets are identified through execution of control process experiments generating as experimental results sequences of control process instructions as will be described in the following.

As will be explained in the following according to the present invention this is achieved through stimulation of cyber-physical systems and related cyber-physical objects tentative control input parameter activation patterns and through observing related observation parameter patterns observed in response to the parameter activation patterns.

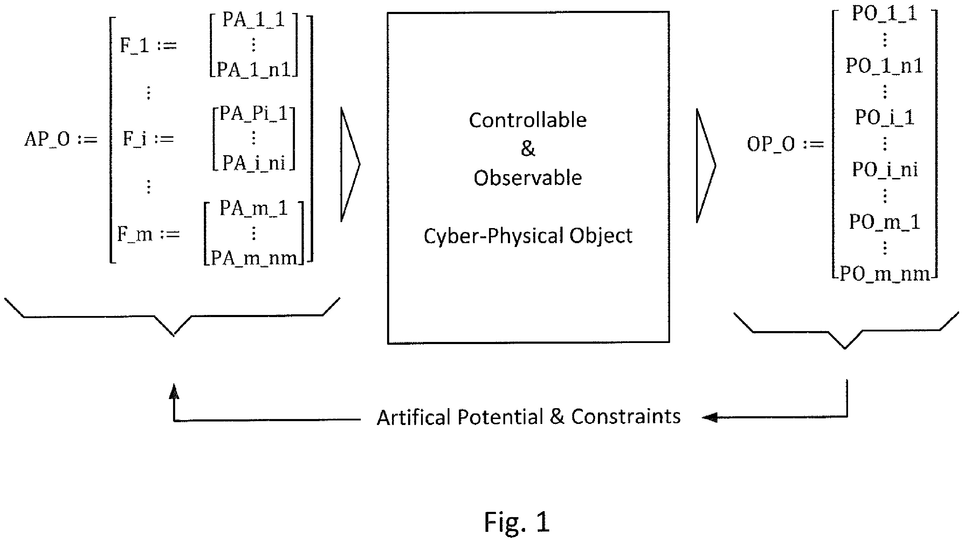

Fig. 1 shows a controllable and observable cyber-physical object, an activation pattern supplied to the cyber-physical object as process input, and an observation pattern generated by the cyber-physical object in response to the supplied activation pattern.

As shown in Fig. 1, controllable and observable cyber-physical objects also referred to as cyber-physical objects in short in the following have assigned thereto at least one parametrized function $F\_O = [F\_1, ..., F\_m]$ as follows:

$$F\_O := \begin{bmatrix} F\_1 := & \begin{bmatrix} P\_1\_1 \\ \vdots \\ P\_1\_n1 \end{bmatrix} \\ \vdots \\ F\_i := & \begin{bmatrix} P\_i\_1 \\ \vdots \\ P\_i\_ni \end{bmatrix} \\ \vdots \\ F\_m := & \begin{bmatrix} P\_m\_1 \\ \vdots \\ P\_m\_nm \end{bmatrix} \end{bmatrix}$$

Generally, each parameter of the parametrized function represents a degree of freedom for control of the cyber-physical object and has a predetermined value range. Also, execution of functionality the at least one parametrized function may lead to a change of at least one tangible and/or non-tangible feature of a cyber-physical object having the at least one parametrized function assigned thereto.

As shown in Fig 1, according to the present invention a cyber-physical system receives as input a parameter activation pattern AP_O according to

$$
AP\_O := \begin{bmatrix} F\_1 := \begin{bmatrix} PA\_1\_1 \\ \vdots \\ PA\_1\_n1 \end{bmatrix} \\ \vdots \\ F\_i := \begin{bmatrix} PA\_Pi\_1 \\ \vdots \\ PA\_i\_ni \end{bmatrix} \\ \vdots \\ F\_m := \begin{bmatrix} PA\_m\_1 \\ \vdots \\ PA\_m\_nm \end{bmatrix} \end{bmatrix}.
$$

As shown in Fig. 1, the parameter activation pattern is related to at least one parameter of at least one parametrized function being assigned to the cyber-physical object to represent a degree of freedom for execution of a control process. It should be noted that any change of a parameter may be independent from the change of any other parameter or vice versa which then leads to sets of depend parameters across different parametrized function.

Further, it should be noted that any input of a parameter activation results in a change of at least one tangible and/or non-tangible feature of the cyber-physical object and thus forms the basis for control process generation according to the present invention.

As shown in Fig. 1, any change of at least one tangible and/or non-tangible feature of the cyber-physical object may be observed at the output side of the cyber-physical object and may be modelled as a parameter observation pattern OP_O such that any parameter activation PA_i_j at a control process stage n has assigned thereto related a parameter observation PO_iJ according to

$$
OP\_O := \begin{bmatrix} PO\_1\_1 \\ \vdots \\ PO\_1\_n1 \\ \vdots \\ PO\_i\_1 \\ \vdots \\ PO\_i\_ni \\ \vdots \\ PO\_m\_1 \\ \vdots \\ PO\_m\_nm \end{bmatrix}.
$$

As shown in Fig. 1, to find activation patterns the drive a control process towards a specified control process target one may assume without loss of generality that a control process is specified by at least one pair of a control process observation start pattern and a control process observation target pattern.

As shown in Fig. 1, for automized control process generation according to the present invention there is established a feedback mechanism in relation to parameter activation patterns and parameter observation patterns. Here, the object is to find parameter activation patterns that drive a control process towards a control process observation target.

As shown in Fig. 1, according to the present invention there is specified an artificial potential to evaluate control process progress during automized control process generation. Also, according to the present invention there is specified a set of constrains being imposed on the control process to model operative constraints with in the cyber-physical system for the control process is to be generated.

It should be noted that according to the present invention constraints are not restricted to any particular cyber-physical object or any characteristic there of but may also be imposed onto specified of control process timing requirement or one or more control process steps in a control process sequence. In view of this constraints may be represented in a most general manner according to

$$C := \begin{bmatrix} C\_1 \\ \vdots \\ C\_i \\ \vdots \\ C\_c \end{bmatrix}$$

In view of the above, the artificial potential is defined with respect to at least one cyber-physical object, a parametrized function i assigned thereto, and a related parameter PO_iJ a change in a value of the parameter from a stage step n-1 of the control process to a step n of the control process as delta value $\Delta\_O\_i\_j$. Also, delta values for all cyber-physical objects involved in a control process to be generated are aggregated.

Also, the artificial potential serves to reflect fulfillment or violation of a control process constraint applicable to a step n of the control process by introducing a penalty $\zeta\_i$ for violation of constraint C_k.

In conclusion, according to the present invention the artificial potential is defined with respect to control process progress according to

$$\Delta\_O\_i\_j = \begin{cases} \delta\_i\_j, & PO\_i\_j(n-1) \; <> \; PO\_i\_j(n) \\ 0, & PO\_i\_j(n-1) \; = \; PO\_i\_j(n) \end{cases}$$

$$AP\_0 = \sum_{i,j} \Delta\_O\_i\_j$$

$$AP\_progress \; = \; \sum_{O} AP\_O$$

with respect to constraint violations according to

$$\Delta\_C\_i = \begin{cases} \zeta\_i, & C\_i \; not \; met \\ 0, & C\_i \; met \end{cases}$$

$$AP\_constraints = \sum_{k} \Delta\_C\_k$$

and with respect to the total value according to

$$AP \; = \; AP\_progress \; + \; AP\_constraints.$$

Overall, the formulation serves to establish a solution space for control process generation and to achieve an evaluation of a cyber-physical system constellation with respect to a control process target and control process constraints. This forms the basis for automation of the control process synthesis process. It should be noted that once a control process observation target is reached then the value of the artificial potential is zero as the prevail no differences between actual parameter observations and target parameter values and as no constraints are violated.

In the following reference will also be made to states of cyber-physical objects. Here states are related to dedicated expressions of parameters of parametrized function being assigned to the cyber-physical objects. According to the present invention states represent the status of a cyber-physical object when reaching a control process target of a control process and have a one-to-one relationship to at least one parametrized function being assigned to the cyber-physical object.

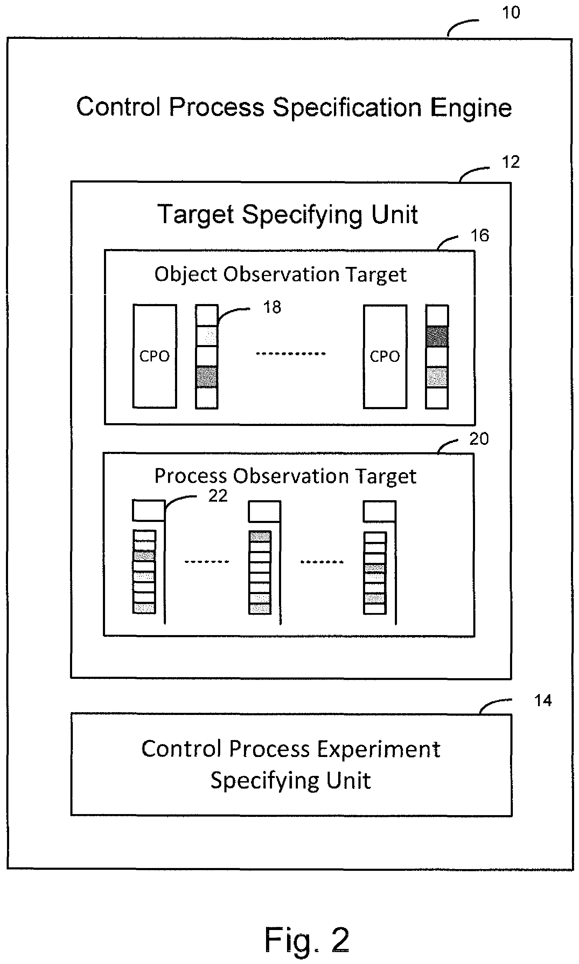

Fig. 2 shows a schematic diagram of a control process specification engine 10 according to the present invention.

According to the present invention the control process specification engine 10 achieves specification a control process for a cyber-physical system.

As outlined above, the cyber-physical system comprises at least one controllable and observable cyber-physical object. The functionality of the at least one cyber-physical object CPO is modelled by a at least one parametrized function that is assigned to the at least one cyber-physical object CPO. Each parameter of the parametrized function represents a degree of freedom for control of the cyber-physical object CPO and has a predetermined value range.

As shown in Fig. 2 the control process specification engine 10 comprises a target specifying unit 12 and a control process experiment specifying unit 14.

Operatively, the target specifying unit 12 is adapted to specify at least one object observation target 16 the at least one cyber-physical object CPO as a dedicated parameter observation 18 with respect to at least one parametrized function being assigned to the at least one cyber-physical object CPO.

Further, operatively the target specifying unit 12 is adapted to specify at least one control process observation target 20 for the control process by selecting at least one object observation target 16 of at least one cyber-physical object CPO for assignment to the control process observation target 20.

From this, also the control process observation target 20 relates to at least one dedicated parameter observation 22 which, however, is not necessarily restricted to a single cyber-physical object CPO but may be applicable across a plurality of cyber-physical objects CPO.

Further, operatively the target specifying unit 12 is adapted to assign a sequential order onto the at least one control process observation target 20 when the control process observation target 20 relates to a plurality of dedicated parameter observations 22.

Further and as will be explained in more detail in the following, automated control process generation according to the present invention is achieved through execution of control process experiments. Heretofore, operatively the control process experiment specifying unit 14 is adapted to specify a control process experiment scenario, e.g., functionality of a control process test environment as explained in the following, resources to be used for a control process experiment, etc.

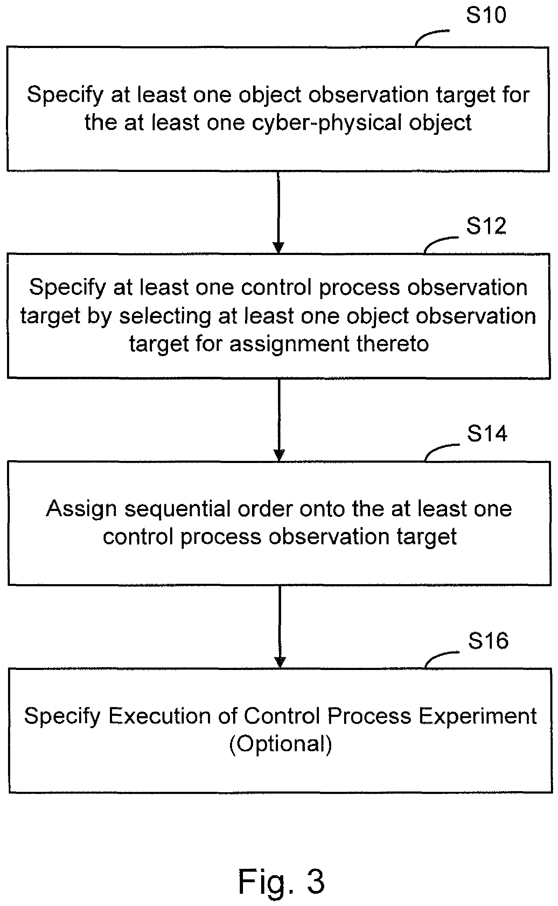

Fig. 3 shows a flowchart of operation for the control process specification engine shown in Fig. 2.

As shown in Fig. 3, the method of specifying a control process comprises a step S10, operatively executed by the target specifying unit 12, to specify at least one object observation target 16 the for at least one cyber-physical object CPO as a dedicated parameter observation 18 with respect to at least one parametrized function being assigned to the at least one cyber-physical object CPO.

It should be noted that in the context of specifying a control process an indexing of dedicated parameter observations in relation to a cyber-physical object applies according to:

$$OP\_O(n) := \begin{bmatrix} OP\_1\_1(n) \\ \vdots \\ OP\_1\_n1(n) \\ \vdots \\ OP\_i\_1(n) \\ \vdots \\ OP\_i\_ni(n) \\ \vdots \\ OP\_m\_1(n) \\ \vdots \\ OP\_m\_nm(n) \end{bmatrix}$$

The introduction of an index reflects that dependent on the number of control process observation targets according to the present invention automated control process generation requires the execution of a plurality of control process experiments in relation to every control process observation target.

As shown in Fig. 3, the method of specifying a control process comprises a step S12, operatively executed by the target specifying unit 12, to specify at least one control process observation target 20 for the control process by selecting at least one object observation target 16, OP_0(n) of at least one cyber-physical object CPO for assignment to the control process observation target 20.

As shown in Fig. 3, the method of specifying a control process comprises a step S14, operatively executed by the target specifying unit 12, to assign a sequential order onto the at least one control process observation target 20.

As shown in Fig. 3, the method of specifying a control process comprises a step S16, operatively executed by the control process specifying unit 14, to specify a control process experiment scenario as outlined above.

In view of the above a control process P(n) may be understood as a union over a sequence of parameter activation patterns, related dedicated parameter observations in relation to single cyber-physical objects in combination with applicable constraints according to

$$P\_O(n) \ = \ (AP\_O(n), OP\_O(n)).$$

$$P(n) \ = \ \bigcup_O (P\_O(n), C(n))$$

Here it is important to understand that a specification of a control process results in specification of dedicated parameter observations and control process observation targets derived therefrom. As will be explained in the following it is only the execution of control process experiments that then allows to identify parameter activations that lead the cyber-physical system towards the specified control process observation targets.

To put it differently, dedicated parameter observations serve to specify control process observation targets while parameter activations are to be varied during control process experiments to identify those parameter activations that are aligned with control process observation targets.

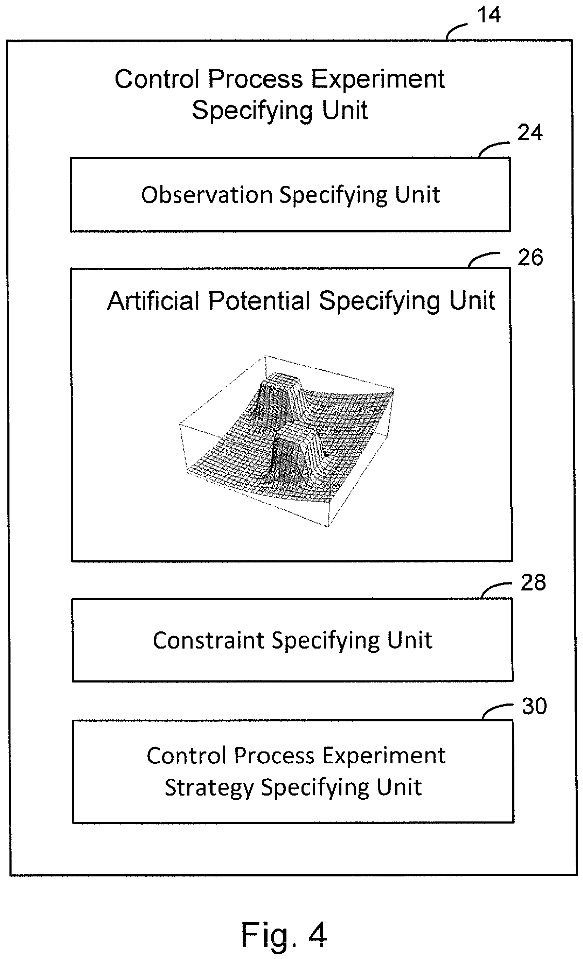

Fig. 4 shows a schematic diagram of control process experiment specifying unit according to the present invention.

As shown in Fig. 4, the control process experiment specifying unit 14 comprises an observation specifying unit 24, an artificial potential specifying unit 26, a constraint specifying unit 28 and a control process experiment strategy specifying unit 30.

Operatively, the observation specifying unit 24 is adapted to specify a type of observation, e.g., in relation to dedicated parameter observations and logic reasoning on dedicated parameter observations.

Operatively, the artificial potential specifying unit 26 is adapted to specify an artificial potential objective function for quantifying a control process experiment progress towards a control process observation target.

Operatively, the constraint specifying unit 28 is adapted to specify at least one constraint in relation to at least one control process observation target to define at least one boundary condition to be fulfilled during a transition to a control process observation target. Generally, the at least one constraint is specified in relation a specific control process experiment n according to:

$$C := \begin{bmatrix} C\_1(n) \\ \vdots \\ C\_i(n) \\ \vdots \\ C\_c(n) \end{bmatrix}$$

Operatively, the control process experiment strategy specifying unit 30 is adapted to specify a control process experiment strategy for execution of a control process experiment.

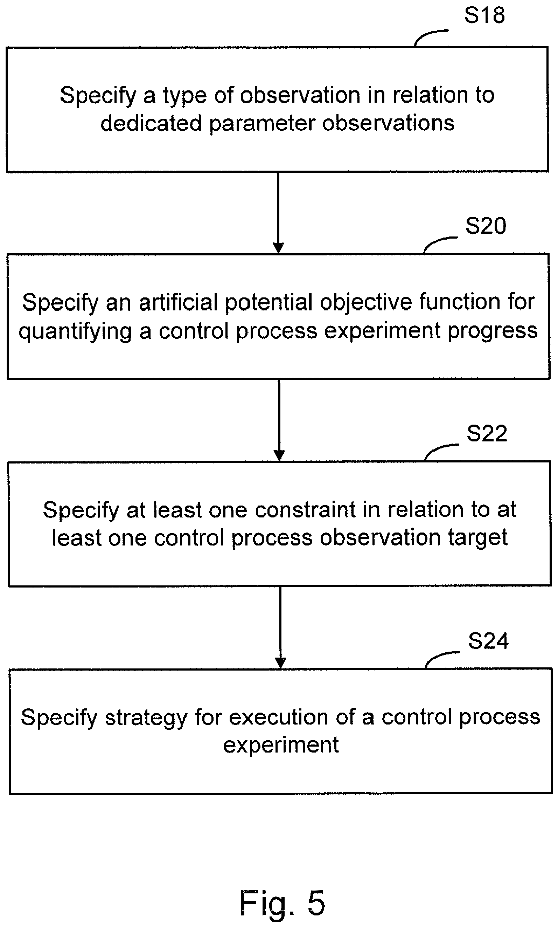

Fig. 5 shows a flowchart of operation for the control process experiment specifying unit 14 shown in Fig. 5.

As shown in Fig. 5, the method of specifying a control process experiment comprises a step S18, operatively executed by the observation specifying unit 24, of specifying a type of observation, e.g., in relation to dedicated parameter observations and logic reasoning on dedicated parameter observations.

According to the present invention a type of observation may be a direct object observation target requiring no further processing of a related dedicated parameter observation.

According to the present invention another type of observation may be an indirect object observation target requiring logic reasoning on a related dedicated parameter observation. The logic reasoning on a related dedicated parameter observation may be executed in consideration of at least one further dedicated parameter observation observed in relation to at least one further object observation target.

According to the present invention another type of observation may be specified for at least one object observation target according to a related observation domain.

According to the present invention another type of observation may be selected from a group comprising an observation in a virtual environment, an observation in a hardware environment, an observation in a firmware environment, and an observation in a computing environment.

E.g., the computing environment may be selected from a group comprising a geometry engine, a 3D movement simulator, a CAD system modelling at least part of the cyber-physical system, and a computation system for determining kinematic dependencies.

As shown in Fig. 5, the method of specifying a control process experiment comprises a step S20, operatively executed by the artificial potential specifying unit 26, of specifying an artificial potential objective function for quantifying a control process experiment progress towards a control process observation target.

According to the present invention the artificial potential objective function may also reflect a violation of at least one constraint to be fulfilled during a transition towards a control process observation target.

According to the present invention the artificial potential objective function may also specify the artificial potential objective function to define a cost function for evaluation of different dedicated parameter observation sequences achieving a same control process progress towards a given control process observation target.

According to the present invention the artificial potential objective function may define an attractive potential field as part of an artificial potential objective function to promote a progress towards a given control process observation target due to at least one parameter variation during a control process experiment.

According to the present invention the artificial potential objective function may define a repulsive potential field as part of the artificial potential objective function to avoid a control process constraint violation due to at least one parameter variation during a control process experiment.

As shown in Fig. 5, the method of specifying a control process experiment comprises a step S20, operatively executed by the constraint specifying unit 28, of specifying at least one constraint in relation to at least one control process observation target to define at least one boundary condition to be fulfilled during a transition to a control process observation target.

According to the present invention an area of application of the at least one constraint may be related to

- a single control process experiment step in a sequence of experimental steps to be executed during a control process experiment for a transition to a control process observation target;
- a sequence of control process experiment steps to be executed during a control process experiment for a transition to a control process observation target;
- at least one timing constraint in relation to a control process observation target; and/or
- at least one parameter of at least one parametrized function assigned to at least one cyber-physical object.

As shown in Fig. 5, the method of specifying a control process experiment comprises a step S20, operatively executed by the control process experiment strategy specifying unit 30, of specifying a control process experiment strategy for execution of a control process experiment.

According to the present invention control process experiment strategy may be to specify a set of at least one parametrized function which is applicable for the execution of a control process experiment.

According to the present invention control process experiment strategy may be to specify uses an analysis of dependencies of parameters of at least one parametrized function representing a degree of freedom for control of the cyber-physical object and then summarize dependent parameters into to a set of preferred parameter variations.

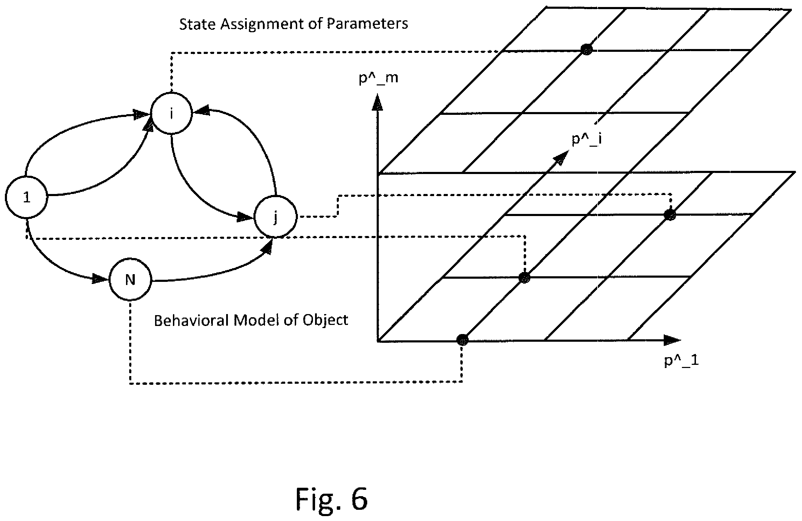

Fig. 6 shows a relation between a behavioral state model of a cyber-physical object and dedicated parameter observations of at least one parametrized function being assigned to the at least one cyber-physical object to describe a further control process experiment strategy.

As shown in Fig. 6, at least one cyber-physical object has assigned thereto a behavioral state model set up from states and related state transitions. As shown in Fig. 6, every state of the behavioral model has assigned thereto at least one dedicated parameter observation according to at least one parameter of at least one parametrized function being assigned to the at least one cyber-physical object.

Then, according to the present invention control process experiment strategy may be to characterize a state transition from a source state to a target state in the behavioral model according to a difference in assignment of at least one dedicated parameter observation between the source state and the target state and to use differences in dedicated parameter observation assignments to define a preferred parameter variation strategy that minimizes a number of parameter variations during a transition from the source state to the target state when a control process experiment starts at a constellation where the at least one cyber-physical object prevails in the start state.

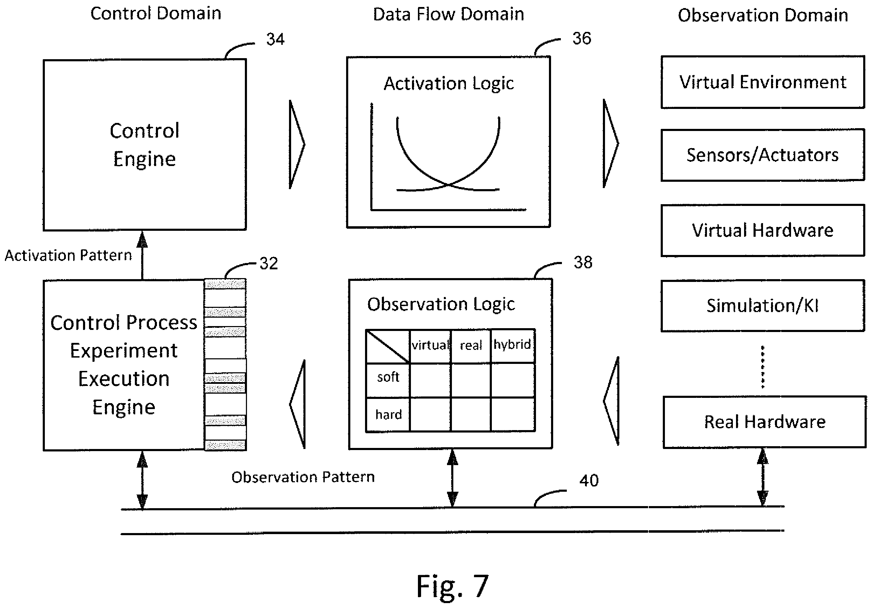

Fig. 7 shows an embedding of a control process experiment execution engine 32 according to the present invention into a control process test environment and an interoperability between a control domain, a dataflow domain, and an observation domain.

As shown in Fig. 7, the execution of a control process experiment according to the present invention is executed by a control process experiment execution engine 32 in cooperation with a control process test environment.

As shown in Fig. 7, the control process test environment is structured into a control domain, a data flow domain, and an observation domain.

As shown in Fig. 7, in the control domain the control process experiment execution engine 32 is operating in cooperation with a control engine 34 adapted to process activation patterns generated by the control process experiment execution engine 32.

As shown in Fig. 7, heretofore the control process experiment execution engine 32 receives dedicated parameter observations for comparison with control process observation targets as outlined above. From this there are derived activation patterns for output to the control engine 34 processing the activation patters to generate observation domain specific control instructions and for running control logic available for implementation of the control process to be generated.

As shown in Fig. 7, the domain specific control instructions are intended for processing in the observation domain. Here, the observation domain does not only run dedicated real hardware but any type of devices and approaches suitable for designing, emulating, simulating, and/or mapping a real control process scenario into a digital domain.

Thus, according to the present invention a type of observation may be selected from a group comprising an observation in a virtual environment, an observation in a hardware environment like sensors or actuators or any other type of real hardware, an observation in a firmware environment, and an observation in a computing environment. E.g., the computing environment may be selected from a group comprising a geometry engine, a 3D movement simulator, a CAD system modelling at least part of the cyber-physical system, a KI based computing system, and a computation system for determining kinematic dependencies.

As shown in Fig. 7, for exchange of data between the control domain and the observation domain there is provided a data flow domain comprising an activation logic 36 and an observation logic 38.

The activation logic 36 is adapted to convert control output of the control engine 34 according to an observation target in the observation domain. A typical example would be a conversion of control instructions into geometry instruction upon application of a virtual environment in the observation domain and/or a conversion of control instructions in instruction data that may be processed digitally. Yet another example would be a conversion of control instructions in instruction that may be processed in analog manner, e.g., a 0-10 V or a 0 -100 mA D/A conversion.

Further, the observation logic 38 is adapted to implement a data observation logic as outlined above. Here, dedicated parameter observations may be related to an actual value from a dedicated parameter observation based on real hardware and/or digital data resulting from processing of a parameter activation in the virtual and/or digital domain. Also, a data bus 40 may be applicable for exchange of data between the control domain and the observation domain, in particular when dedicated hardware is involved in the control process experiment.

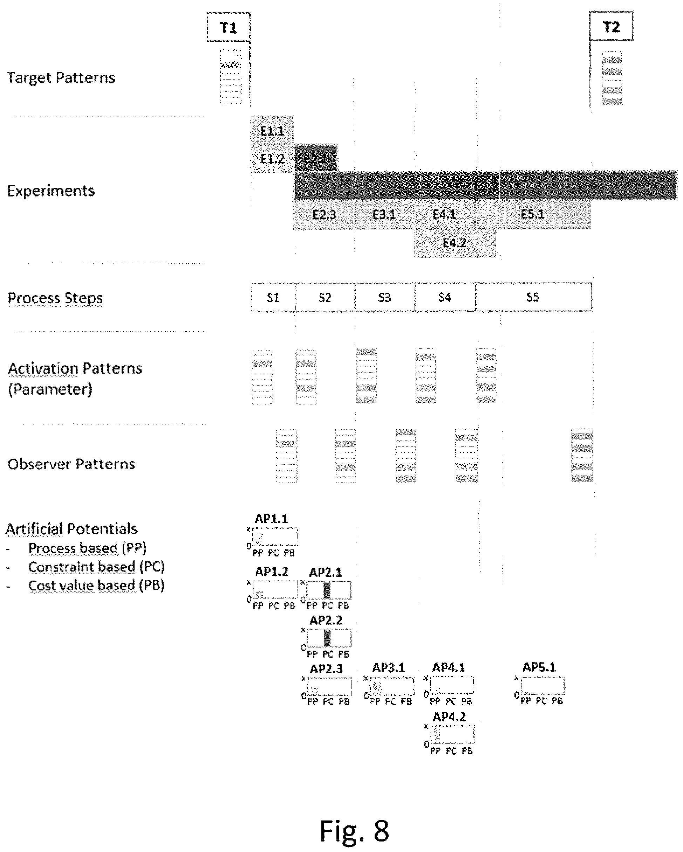

Fig. 8 shows an outline on basic concepts underlying automatic control process generation according to the present invention, in particular on control process execution on the basis of control process observation targets, of constraints, and evaluation of control process experiments on the basis of artificial potentials.

As shown in Fig. 8, the execution of control process experiments is based on control process observation targets, e.g., T1 and T2. To achieve a transition in the control process from the first control process observation target T1 to the second the first control process observation target T2 there is executed at least one control experiment E1.1, E1.2, E2.1, E2.2, E2.3, E3.1, E4.1, E4.2, and E5.1 in association to process steps S1, S2, S3, S4, S5.

Generally, the result of every execution step S1 to S5 is a result of a control process experiment and the identification of activation patterns achieving a transition from the first control process observation target T1 to the second the first control process observation target T2 requires the execution of a plurality of control process experiments.

As shown in Fig. 8, in response to activation patterns the control process experiments generate dedicated parameter observations to be evaluated by the artificial potential objective function.

When a control process experiment is successful, the value of the artificial potential is zero, see E5.1 and related AP5.1.

Otherwise, when a control process experiment is not successful, see E2.1 - constraint violation - or E2.2 - time out-the value of the artificial potential exceeds an admissible value, see AP2.1 and AP2.2.

Otherwise, a control process experiment may also lead to a result which is acceptable as no constraint is violated, see E1.1, E1.2, E2.3, E3.1, E4.1, E4.2 and related AP1.1, AP1.2, AP2.3, AP3.1, AP4.1, AP4.2, however, has a value of the artificial potential larger than zero.

Nevertheless, it may be a suitable control process experiment strategy to continue with a succeeding control process experiment, e.g., executing control process experiment E5.1 following control process experiment E4.1, to increase prospects for the automated control process generation in relation to a transition from the first control process observation target T1 to the second the first control process observation target T2, and, e.g., to escape local minima.

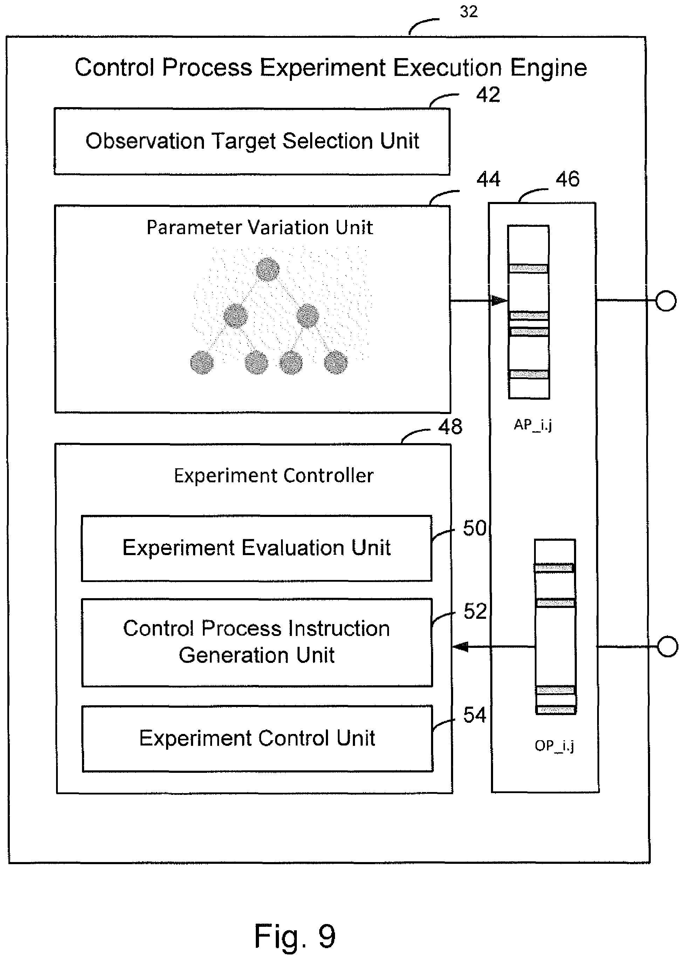

Fig. 9 shows a schematic diagram of a control process experiment execution engine 32 according to the present invention.

As shown in Fig. 9, the control process experiment execution machine 32 for generating at least one control process instruction for a control process comprises an observation target selection unit 42, a parameter variation unit 44, a control process test environment interface 46, and an experiment controller 48.

Operatively, the observation target selection unit 42 is adapted to select at least one control process observation target in the control process as an actual control process observation target.

Operatively, the parameter variation unit 44 is adapted to execute a parameter value variation with respect to at least one parametrized function representing a degree of freedom for control of a cyber-physical object.

Operatively, the control process test environment interface 46 is adapted to submit the at least one parameter value variation to a control process test environment and adapted to receive a dedicated parameter observation in response to the at least one parameter value variation from the control process test environment.

Operatively, the experiment controller 48 is adapted to control process experiment executing at least one control process experimental step to promote a transition from an actual control process observation towards the actual control process observation target.

As shown in Fig. 9, the experiment controller 48 comprises an experiment evaluation unit 50, a control process instruction generation unit 52, and an experiment control unit 54.

Operatively, the experiment evaluation unit 50 is adapted to evaluate the dedicated parameter observation with respect to a progress of the control process experiment towards the actual control process observation target using an artificial potential objective function AP.

Operatively, the control process instruction generating unit 52 is adapted to generate at least one control process instruction from the parameter value variation upon a progress of the control process experiment.

Operatively, the experiment control unit 54 is adapted to control the control process experiment according to a predetermined control process experiment strategy.

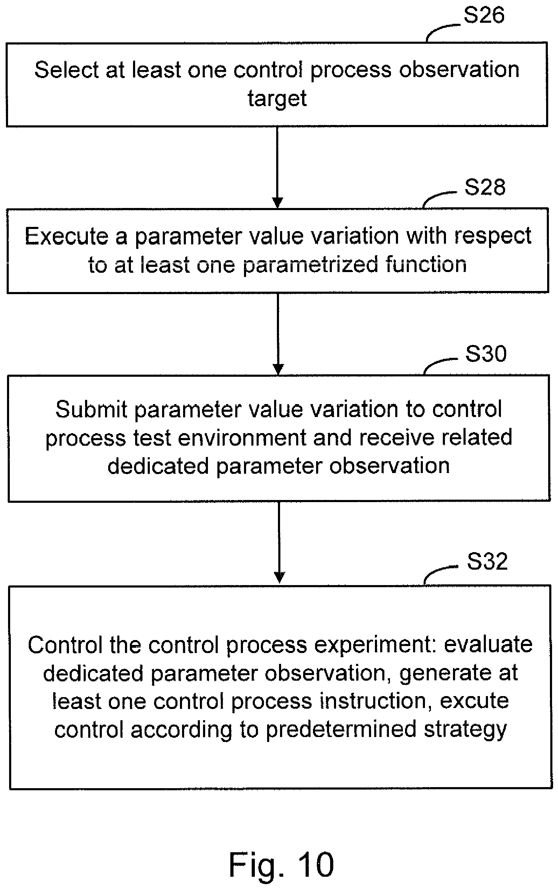

Fig. 10 shows a flowchart of operation for the control process experiment execution engine shown in Fig. 9 to generate at least one control process instruction for a control process to be generated.

Generally, according to the present invention there is introduced a concept of variation in time into the execution of control process experiments to dynamically explore the implications of parameters variations with respect to a cyber-physical system to be controlled and for a control process to be generated.

Thus, during execution of a control process experiment there is operated an experiment clock to track dedicated parameter observations over time. Here, a experiment time resolution depends on processing speed within the control process test environment when computing resources are applied therein, e.g., applicable sampling rates. Otherwise, when hardware resources are applied experiment time resolution may be, e.g., determined by hardware latency or bus band width.

As shown in Fig. 10, the method of generating at least one control process instruction comprises a step S26, operatively being executed by the observation target selection unit 42, of selecting at least one control process observation target in the control process as an actual control process observation target.

As shown in Fig. 10, the method of generating at least one control process instruction comprises a step S28, operatively being executed by the parameter variation unit 44, of executing a parameter value variation with respect to at least one parametrized function representing a degree of freedom for control of a cyber-physical object.

According to the present invention and as explained above any parameter variation may be represented in the form of an activation pattern and of a related observer pattern reflecting the associated dedicated parameter observation.

Further, according to the present invention a parameter value variation may be executed according to a predetermined parameter value variation strategy. Here, the parameter value variation may be selected from a group comprising a random parameter value variation strategy, a behavioral model driven parameter value variation strategy that uses a behavioral modelling of at least one cyber-physical object to identify parameter value variations that are aligned with the functionality of the at least one cyber-physical object, or a hybrid form of the random parameter value variation strategy and the behavioral model driven parameter value variation strategy.

Further, according to the present invention parameter value variation may use a static pruning of a parameter variation space prior to execution of the control process experiment to cope with at least one parameter of at least one parametrized function which is not involved in the control process to be generated.

Further, according to the present invention parameter value variation may use a static pruning of the parameter variation space prior to execution of the control process experiment to cope with at least one parameter value variation that a priori leads to a violation of at least one control process constraint.

Further, according to the present invention parameter value variation may use a dynamic pruning of the parameter variation space to exclude repetition of at least one parameter value variation showing no progress of the control process experiment towards the actual control process observation target.

As shown in Fig. 10, the method of generating at least one control process instruction comprises a step S30, operatively being executed by the control process test environment interface 46, of submitting the at least one parameter value variation to a control process test environment and adapted to receive a dedicated parameter observation in response to the at least one parameter value variation from the control process test environment.

As shown in Fig. 10, the method of generating at least one control process instruction comprises a step S32, operatively being executed by the experiment controller 48, of controlling process experiment executing and related at least one control process experimental step to promote a transition from an actual control process observation towards the actual control process observation target.

As shown in Fig. 10, the method of generating at least one control process instruction comprises a first substep of step S32, operatively being executed by the experiment evaluation unit 50, of evaluating the dedicated parameter observation with respect to a progress of the control process experiment towards the actual control process observation target using an artificial potential objective function AP.

As shown in Fig. 10, the method of generating at least one control process instruction comprises a second substep of step S32, operatively being executed by control process instruction generation unit 52, of generating at least one control process instruction from the parameter value variation upon a progress of the control process experiment.

As shown in Fig. 10, the method of generating at least one control process instruction comprises a third substep of step S32, operatively being executed by the experiment control unit 54, of controlling the control process experiment according to a predetermined control process experiment strategy.

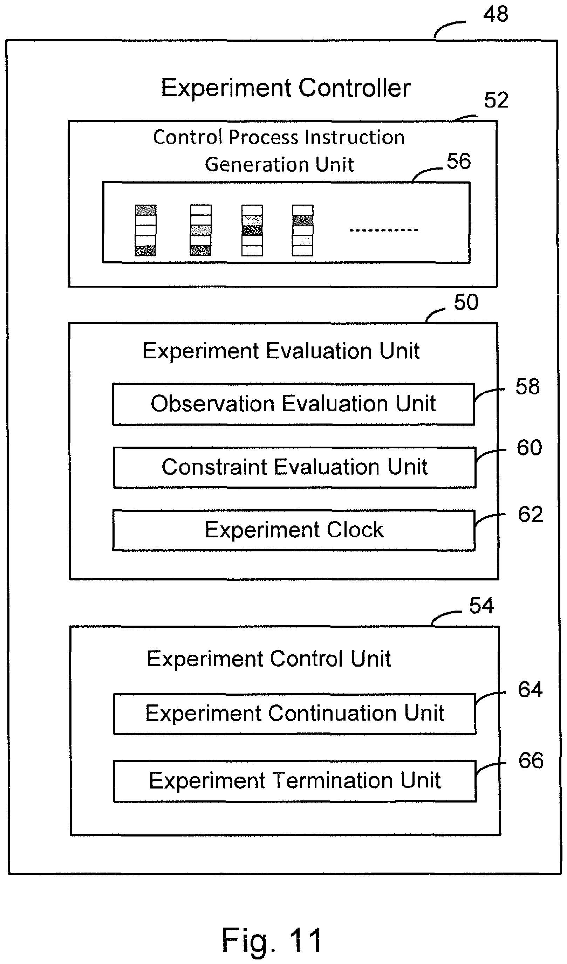

Fig. 11 shows a further detailed schematic diagram of the experiment controller 48 shown in Fig. 9.

As shown in Fig. 11, the experiment controller 48 comprises the control process instruction generation unit 52 having a control process experiment memory 56, the experiment evaluation unit 50, and the experiment control unit 54.

Operatively, the control process instruction generation unit 52 is adapted to store at least one parameter value variation, optionally related parameter activation, optionally related dedicated parameter observation, and optionally any other type of experiment related data generated during the execution of the control process experiment in the control process experiment memory 56.

Further, the data stored in the control process experiment memory 56 is then used by the control process instruction generation unit 52 for a generation of at least one control process instruction upon a progress of the control process experiment, e.g., immediately after every parameter variation or subsequent to a successful termination of a control process experiment or a sequence of control process experiments.

E.g., the control process instruction generation unit 52 may be adapted to generate at least one control process instruction from at least one parameter value variation stored in a control process experiment memory upon a progress of the control process experiment.

Further, as shown in Fig. 11 the experiment evaluation unit 50 comprises an observation evaluation unit 58, a constraint evaluation unit 60 and an experiment clock 62.

Operatively, the observation evaluation unit 58 is adapted to evaluate at least one dedicated parameter observation to be processed by the control process experiment execution engine 32.

Operatively, the constraint evaluation unit 60 is adapted to monitor constraint violation of at least one constraint imposed on a control process experiment.

Operatively, the experiment clock 62 clock is adapted to monitor a timeout condition for the control process experiment.

Further, as shown in Fig. 11 the experiment control unit 54 comprises an experiment continuation unit 64 and an experiment termination unit 66.

Operatively, the experiment continuation unit 64 is adapted to implement the control process experiment strategy with respect to continuation of a control process experiment.

Operatively, the experiment termination unit 66 is adapted to implement the control process experiment implement with respect to continuation of a control process experiment.

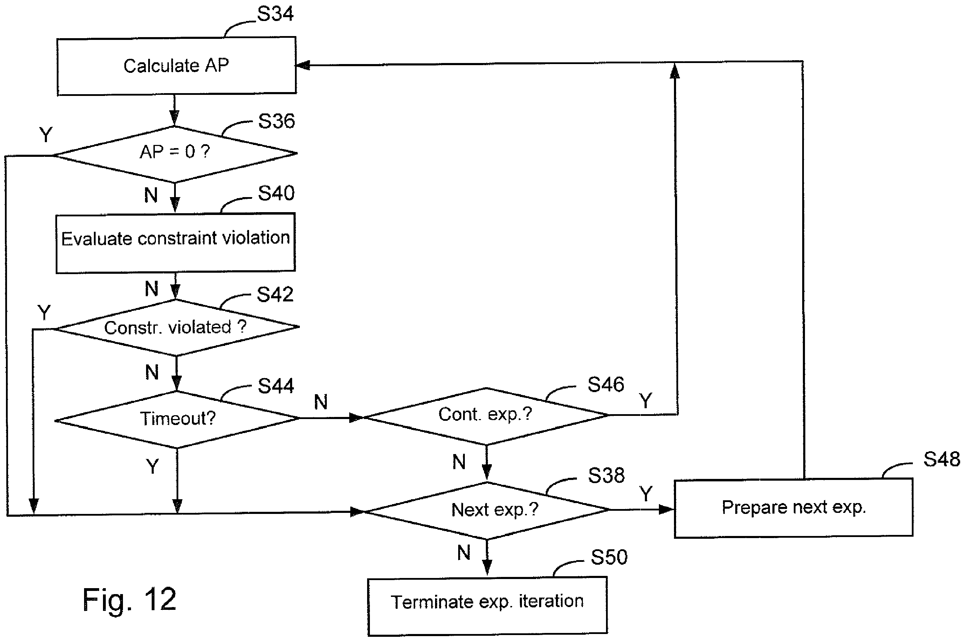

Fig. 12 shows a flowchart of operation executed by the experiment evaluation unit 50 and the experiment control unit 54 shown in Fig. 11 for iteration of at least one control process experiment.

Generally, according to the present invention it may be assumed that an iteration process of control process experiments starts at any start point in the solution space defined for control process experiments and that therefore a start transition from the start point to a pre-determined defined experiment start point must be found.

According to the present invention the start transition is achieved by execution of a starting iteration process of control process experiments to move towards a control process observation start target which specified for the control process experiment iteration. To promote a transition from an actual control process observation towards the control process observation start target dedicated knowledge on the cyber-physical system and on the at least one cyber-physical object being operated therein may be used.

Once control process observation start target is reached the iteration process for at least one control process experiment starts. Here, at the end of every control process experiment a decision has to be taken whether the iteration of at least one control process experiment terminates or not. Depending on the decision the iteration will either be continued through preparation of the next control process experiment or be terminated, e.g., upon successful termination thereof.

As shown in Fig. 12, to achieve evaluation of a dedicated parameter observation there is executed a sequence of steps as explained in more detail in the following.

As shown in Fig. 12, the iteration of at least one control process experiment comprises a step S34, operatively being executed by the observation evaluation unit 58 of the experiment evaluation unit 50, of calculating a value for an artificial potential from an artificial potential cost function.

Here, the calculation of a value of the artificial potential is executed with respect to a dedicated parameter observation received from the control process test environment in response to submission of an activation pattern thereto. Here, pre-processing steps, e.g., logic reasoning with respect to indirect observation or any conversion of measurement data may either be executed by the observation of the control process test environment or alternative be integrated at least in part in to the artificial potential calculation process.

Further, according to the present invention the artificial potential may be calculated from an attractive potential field of the artificial potential objective function to quantify progress towards the actual control process observation target.

Also, the artificial potential may reflect a cost function value for a dedicated parameter observation reflecting at least an experimental effort for generation of the dedicated parameter observation. The cost function value may be used decided on the iteration of the control process experiments upon availability of a plurality of iteration options.

As shown in Fig. 12, the iteration of at least one control process experiment comprises a step S36, operatively being executed by the observation evaluation unit 58 of the experiment evaluation unit 50, of evaluating an artificial potential and to decide on the further control process experiment iteration depending on an artificial potential calculation result.

As outlined above, a value of zero for the artificial potential means successful termination of a control process experiment so that the iteration of at least one control process experiment branches to a step S38 to decide on execution of a next control process experiment. Otherwise, the iteration of at least one control process experiment proceeds to a step S40 for evaluation of at least one applicable constraint.

As shown in Fig. 12, the iteration of at least one control process experiment comprises the step S40, operatively being executed by the constraint evaluation unit 60 of the experiment evaluation unit 50, of evaluating at least one constraint.

Here, every constraint defines at least one boundary condition to be fulfilled during a transition to the control process observation target. A boundary condition may be specified in relation to a single control process experiment step, to a sequence of control process experiment steps, to at least one timing in relation to a control process observation target, and/or at least one parameter of at least one parametrized function assigned to at least one cyber-physical object CPO.

According to the present invention a constraint violation may be identified by computing an observation dependent constraint value according to a repulsive potential field of the artificial potential objective function.

As shown in Fig. 12, the iteration of at least one control process experiment comprises a step S42, operatively being executed by the constraint evaluation unit 58 of the experiment evaluation unit 50, of deciding on the further iteration of the control process experiment depending on the dedicated parameter observation evaluation result.

As outlined above, a violation of a constraint leads to immediate termination of a control process experiment so that the iteration of at least one control process experiment branches to the step S38 to decide on execution of a next control process experiment. Otherwise, the iteration of at least one control process experiment proceeds to a step S44 for evaluation of experiment run time.

As shown in Fig. 12, the iteration of at least one control process experiment comprises the step S44, operatively being executed by the experiment clock 62 of the experiment evaluation unit 50, of deciding on the further iteration of the control process experiment depending on a timeout.

In more detail, timeout of a control process experiment means that an execution time for a control process experiment exceeds a predetermined value leading to a control process experiment termination.

Then, the the iteration of at least one control process experiment branches to the step S38 to decide on execution of a next control process experiment. Otherwise, the iteration of at least one control process experiment proceeds to a step S46 to decide on continuation of the currently executed control process experiment.

It should be noted that while above the evaluation of a dedicated parameter observation has been described as sequence of artificial potential calculation, evaluation of at least one constraint violation, and evaluation of timeout any other suitable sequence may be applicable according to the present invention. E.g., an evaluation of may be executed first to avoid any waste of processing time. Also, the evaluation of at least one constraint and the evaluation of time may be revered in order with respect to the sequence shown in Fig. 12.

As shown in Fig. 12, further to the evaluation of a dedicated parameter observation evaluation and depending on the result thereof the iteration of at least one control process also relates to deciding on the further progress of a control process experiment iteration according to a predetermined control process experiment strategy as will be explained in the following.

As shown in Fig. 12, the iteration of at least one control process experiment comprises the step S46, operatively being executed by the experiment continuation unit 64 of the experiment control unit 54, of deciding on continuation of a currently executed control process experiment.

If the decision in step S46 is affirmative than the iteration of the control process experiment restarts at step S34 to calculate an artificial potential for a next dedicated parameter observation.

Here, the result of execution of step S46 may be to accept a parameter value variation leading to a dedicated parameter observation under consideration as an intermediate result of a control process experiment when the related observation dependent progress value is lower than a predetermined threshold and the related observation dependent constraint value fulfills a specified constraint.

Further, the result of execution of step S46 may be a selection of a dedicated parameter observation having lowest cost function value from a plurality of dedicated parameter observations having a same artificial potential and thus a same observation dependent progress value without violating any relevant constraint.

Further, the result of execution of step S46 may be to continue the iteration process by starting a next the control process experiment when the current control process experiment terminates due to timeout.

Further, the result of execution of step S46 may be to continue the control process experiment at an intermediate control process stage without control process progress to avoid control process constraint violation.

A reason heretofore may be to escape local minima or to avoid foreseeable constraint violations. E.g., it might be useful to accept an artificial potential increase to avoid a constellation leading to a collision in a linear movement by changing move direction away from a target position but without collision between a moving object and a potential barrier.

Further, the result of execution of step S46 is to not continue with the current control process experiment, then the iteration of the control process experiment proceeds to the step S38 to decide on the continuation of the iteration process.

As shown in Fig. 12, the iteration of at least one control process experiment comprises the step S38, operatively being executed by the experiment continuation unit 64 of the experiment control unit 54, of deciding on continuation of the iteration process through start of a next control process experiment or on termination of the iteration process.

If the decision in step S38 is affirmative than the iteration of the control process experiment proceeds to step S48 prepare and start a next control process experiment. Otherwise, the iteration of the control process experiment proceeds to the step S50 for termination of the iteration process.

As shown in Fig. 12, the iteration of at least one control process experiment comprises the step S48, operatively being executed by the experiment continuation unit 64 of the experiment control unit 54, to prepare and start a next control process experiment for continuation of the iteration process.

Typically, the step S48 to start a next control process execution experiment will be executed when the actual dedicated parameter observation corresponds to the actual control process observation target.

Further, the step S48 may be executed to set a start condition of a next control process experiment according to a control process experiment result of a preceding control process experiment, e.g., when the preceding control process experiment does not terminate due to a timeout.

Further, the step S48 may be executed to restart the control process experiment when the dedicated parameter observation corresponds to the actual control process observation target to identify at least one alternative transition from the actual control process observation prevailing at the start of the control process experiment under consideration to an actual control process observation target.

As shown in Fig. 12, the iteration of at least one control process experiment comprises the step S50, operatively being executed by the experiment termination unit 64 of the experiment control unit 54, to execute termination of the iteration process.

Here, the termination of the iteration process occurs when a final control process observation target is not reach or when a final control process observation target is reached.

Further, when a final control process observation target is reached the step S50 may be executed to post process the iteration process for at least one control process experiment, e.g., for generation of at least one control process instruction on the basis data stored in the control process experiment memory 56 of the control process instruction generation unit 52.

While above the present invention has been described in general in the following there will be described an example of applying the automated control process generation according to the present invention for control of a workstation set up form a motion conveyor, a buffer module and a processing module. Thus, the workstation is an example of a cyber-physical system are examples of motion conveyor, a buffer module and a processing module related cyber physical objects.

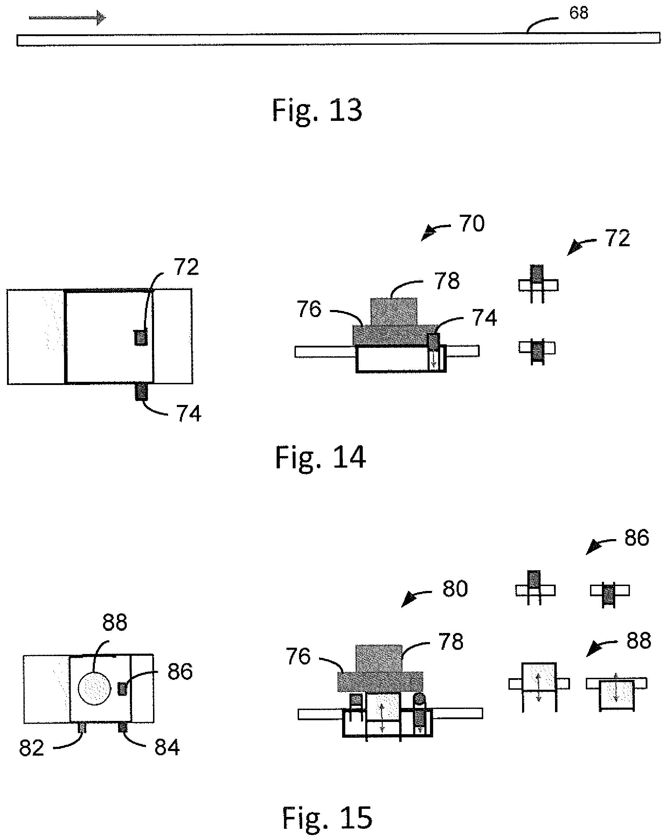

Fig. 13 shows a motion conveyor 68 forming part of a workpiece processing station to be controlled by an automatically generated control process according to the present invention.

Operatively, the motion conveyer 68 serves to move a workpiece carrier used to transport a workpiece.

The motion conveyor 68 has assigned thereto one parametrized function F6(P1) having one parameter P1 representing a first degree of freedom for control of the motion conveyor 68 by operating the motion conveyor in a backward, stop, or forward mode. In relation to the motion conveyor 68 there is operated one observer C8 to observe motion of the motion conveyor.

Thus, the parametrized function assigned to the motion conveyor 68 is defined according to F6(P1) :=

$$\begin{bmatrix} P1 = \text{forward} & \text{Observer C8} & \text{C8A forward motion on} \\ P1 = \text{backward} & \text{Observer C8} & \text{C8B backward motion on} \\ P1 = \text{stop} & \text{Observer C8} & \text{C8C motion off} \end{bmatrix}$$

In conclusion, the motion conveyor 68 has assigned thereto one parametrized function F6(P1) and has one degree of freedom for control thereof as represented by the parameter P1.

Further, from the definition of the parametrized function F6(P1) it follows that the output of the observer C8 has different values C8A, C8B, C8C according to the operational mode of the motion conveyor 68.

Thus, during execution of a control process experiment in relation to the motion conveyor 68 the parameter P1 may be varied. The variation of the parameter P1 will then be submitted to a control process test environment for generation of a related dedicated parameter observation C8A, C8B, or C8C by the observer C8.

As explained above with respect to Fig. 6, the motion conveyor 68 may also have assigned thereto a behavioral model having states S conveyor_1, S_conveyor_2, S_conveyor_3 being defined by dedicated expressions of the parameter P1. In more detail such states may be described as pairs of dedicated expressions of parameter P1 in combination with dedicated parameter observations C8A, C8B, or C8C according to:

S conveyor_1

$$\{P1 = \text{forward}\} \leftrightarrow \{C8A\}$$

S_conveyor_2

$$\{P1 = \text{backward}\} \leftrightarrow \{C8B\}$$

S_conveyor_3

$$\{P1 = \text{stop}\} \leftrightarrow \{C8C\}$$

The systematology introduced above with respect to the motion conveyor will be applied consistently also with respect to the further constituent modules of the workpiece processing station in the following.

Fig. 14 shows buffer module 70 forming part of the workpiece processing station.

As shown in Fig. 14, the buffer module 70 comprises a buffer stopper 72 and buffer proximity sensor 74.

Operatively, the buffer stopper 72 may either be extended to hold a workpiece carrier 76 carrying a workpiece 78 positioned on the workpiece carrier 76 in the buffer module 70 or may be retracted to let the workpiece carrier 76 pass through the buffer module 70.

Further, operatively the buffer proximity sensor 74 may either indicate occupation or clearance of the buffer module 70 depending on the state of the buffer stopper 72.

The buffer module 70 has assigned thereto a first parametrized function F5(P2) having one parameter P2 representing a first degree of freedom for control of the buffer module 70 by operating the buffer stopper 72. In relation to the buffer module 70 there is operated a first observer C6 to observe extension or retraction of the buffer stopper 72.

Thus, the first parametrized function assigned to the buffer module 70 is defined according to F5(P2) :=

$$\begin{bmatrix} P2 = \text{extend} & \text{Observer C6} & \text{C6A buffer stopper 72 extended} \\ P2 = \text{retract} & \text{Observer C6} & \text{C6B buffer stopper 72 retracted} \end{bmatrix}$$

Further, the buffer module 70 has assigned thereto a second parametrized function F7(P3) having one parameter P3 representing a second degree of freedom for control by observing the output of the buffer proximity sensor 74. In relation to the buffer module 70 there is operated a second observer C7 to observe occupation or clearance of the buffer proximity sensor 74.

Thus, the second parametrized function assigned to the buffer module 70 is defined according to F7(P3) :=

$$\begin{bmatrix} P3 = \text{occupy} & \text{Observer C7} & \text{C7A buffer proximity sensor 74 occupied} \\ P3 = \text{clear} & \text{Observer C7} & \text{C7B buffer proximity sensor 74 cleared} \end{bmatrix}$$

In conclusion, the buffer module 70 has assigned thereto two parametrized functions F5(P2), F7(P3) and has two degrees of freedom for control thereof as represented by the parameters P2, P3. From this, relevant states of the buffer module 70 are summarized as

S_buffer_1

$$\begin{Bmatrix} P2 = \text{extend} \\ P3 = \text{occupy} \end{Bmatrix} \leftrightarrow \begin{Bmatrix} C6A \\ C7A \end{Bmatrix}$$

S_buffer_2

$$\begin{Bmatrix} P2 = \text{retract} \\ P3 = \text{occupy} \end{Bmatrix} \leftrightarrow \begin{Bmatrix} C6B \\ C7A \end{Bmatrix}$$

S_buffer_3

$$\begin{Bmatrix} P2 = \text{extend} \\ P3 = \text{clear} \end{Bmatrix} \leftrightarrow \begin{Bmatrix} C6A \\ C7B \end{Bmatrix}$$

S_buffer_4

$$\begin{Bmatrix} P2 = \text{retract} \\ P3 = \text{clear} \end{Bmatrix} \leftrightarrow \begin{Bmatrix} C6B \\ C7B \end{Bmatrix}$$

Fig. 15 shows a processing module 80 forming part of the workpiece processing station.

As shown in Fig. 15, the processing module 80 comprises a RFID reader 82, processing module PM proximity sensor 84, a processing module PM stopper 86, and a processing module PM positioning module 88.

Operatively, the PM stopper 86 may either be extended or retracted. Also, the PM positioning module 88 may either be extended or retracted.

Further, operatively a move of the workpiece carrier 76 into the processing module 80 may be detected by the RFID reader 82 or the PM proximity sensor 84.

Further, operatively upon a detection of the move of the workpiece carrier 76 into the processing module 80 the PM stopper 86 is extended to hold the workpiece carrier 76 within the processing module 80. Then the PM positioning module 88 will position the workpiece 78 carried by the workpiece carrier 76 at a working position.

The processing module 80 has assigned thereto a first parametrized function F1(P4) having one parameter P4 representing a first degree of freedom for control of the processing station by operating the PM stopper 86. In relation to the PM stopper 86 there is operated a first observer C1 to observe extension or retraction of the PM stopper 86.

Thus, the first parametrized function assigned to the processing module 80 is defined according to F1(P4) :=

$$\begin{bmatrix} P4 = \text{extend} & \text{Observer C1} & \text{C1A PM stopper 86 extended} \\ P4 = \text{retract} & \text{Observer C1} & \text{C1B PM stopper 86 retracted} \end{bmatrix}$$

Further, the processing module 80 has assigned thereto a second parametrized function F2(P5) having one parameter P5 representing a second degree of freedom for control of the processing module 80 by operating the PM positioning module 88. In relation to the PM positioning module 88 there is operated a second observer C2 to observe extension or retraction of the PM positioning module 88.

Thus, the second parametrized function assigned to the processing module 80 is defined according to F2(P5) :=

$$\begin{bmatrix} P5 & = & \text{extend} & Observer\ C2 & C2A\ \text{PM positioning module 88 extended} \\ P5 & = & \text{retract} & Observer\ C2 & C2B\ \text{PM positioning module 88 retracted} \end{bmatrix}$$

Further, the processing module 80 has assigned thereto a third parametrized function F3(P6) having one parameter P6 representing a third degree of freedom for control for the processing module 80 by observing the output of the PM proximity sensor 84. In relation to the PM proximity sensor 84 there is operated a third observer C3 to observe occupation or clearance of the PM proximity sensor 84.

Thus, the third parametrized function F3(P6) assigned to the processing module 80 is defined according to F3(P6) :

$$\begin{bmatrix} P6 & = & \text{occupy} & Observer\ C3 & C3A\ \text{PM proximity sensor 84 occupied} \\ P6 & = & \text{clear} & Observer\ C3 & C3B\ \text{PM proximity sensor 84 cleared} \end{bmatrix}$$

Further, the processing module 80 has assigned thereto a fourth parametrized function F4(P7) having one parameter P7 representing a fourth degree of freedom for control of by observing the output of the RFID sensor 82. In relation to the RFID sensor 82 there is operated a fourth observer C4 to observe output of the RFID sensor 82.

Thus, the third parametrized function F3(P6) assigned to the processing module 80 is defined according to F4(P7) :=

$$\begin{bmatrix} P7 & = & \text{read} & Observer\ C4 & C4A\ \text{RFID sensor 82 read successful} \\ & & & Observer\ C4 & C4B\ \text{RFID sensor 82 read failed} \\ & & & Observer\ C4 & C4C\ \text{RFID sensor 82 no tag detected} \\ P7 & = & \text{noop} & Observer\ C4 & C4D\ \text{RFID sensor 82 noop} \end{bmatrix}$$

In conclusion, the processing module 80 has assigned thereto four parametrized functions F1(P4), F2(P5), F3(P6), F4(P7) and has four degrees of freedom for control thereof as represented by the parameters P4, P5, P6, and P7. From this, relevant states of the buffer module are summarized as

S_PM_1

$$\begin{Bmatrix} P4 & = & \text{retract} \\ P5 & = & \text{retract} \\ P6 & = & \text{clear} \\ P7 & = & \text{noop} \end{Bmatrix} \leftrightarrow \begin{Bmatrix} C1B \\ C2B \\ C3B \\ C4D \end{Bmatrix}$$

S_PM_2

$$\begin{Bmatrix} P4 & = & \text{retract} \\ P5 & = & \text{retract} \\ P6 & = & \text{clear} \\ P7 & = & \text{no tag} \end{Bmatrix} \leftrightarrow \begin{Bmatrix} C1B \\ C2B \\ C3B \\ C4C \end{Bmatrix}$$

S_PM_5

$$\begin{Bmatrix} P4 & = & \text{retract} \\ P5 & = & \text{retract} \\ P6 & = & \text{occupy} \\ P7 & = & \text{noop} \end{Bmatrix} \leftrightarrow \begin{Bmatrix} C1B \\ C2B \\ C3A \\ C4D \end{Bmatrix}$$

S_PM_6

$$\begin{cases} P4 = retract \\ P5 = retract \\ P6 = occupy \\ P7 = no\,tag \end{cases} \leftrightarrow \begin{cases} C1B \\ C2B \\ C3A \\ C4C \end{cases}$$

S_PM_7

$$\begin{cases} P4 = retract \\ P5 = retract \\ P6 = occupy \\ P7 = failed \end{cases} \leftrightarrow \begin{cases} C1B \\ C2B \\ C3A \\ C4B \end{cases}$$

S_PM_8

$$\begin{cases} P4 = retract \\ P5 = retract \\ P6 = occupy \\ P7 = read \end{cases} \leftrightarrow \begin{cases} C1B \\ C2B \\ C3A \\ C4A \end{cases}$$

S_PM_9

$$\begin{cases} P4 = retract \\ P5 = extend \\ P6 = clear \\ P7 = noop \end{cases} \leftrightarrow \begin{cases} C1B \\ C2A \\ C3B \\ C4D \end{cases}$$

S_PM_10

$$\begin{cases} P4 = retract \\ P5 = extend \\ P6 = clear \\ P7 = no\,tag \end{cases} \leftrightarrow \begin{cases} C1B \\ C2A \\ C3B \\ C4C \end{cases}$$

S_PM_11

$$\begin{cases} P4 = retract \\ P5 = extend \\ P6 = clear \\ P7 = failed \end{cases} \leftrightarrow \begin{cases} C1B \\ C2A \\ C3B \\ C4B \end{cases}$$

S_PM_17

$$\begin{cases} P4 = extend \\ P5 = extend \\ P6 = clear \\ P7 = noop \end{cases} \leftrightarrow \begin{cases} C1A \\ C2A \\ C3B \\ C4D \end{cases}$$

S_PM_18

$$\left.\begin{array}{l} P4 = \text{extend} \\ P5 = \text{extend} \\ P6 = \text{clear} \\ P7 = \text{no tag} \end{array}\right\} \leftrightarrow \left\{\begin{array}{l} C1A \\ C2A \\ C3B \\ C4C \end{array}\right.$$

S_PM_19

$$\left.\begin{array}{l} P4 = \text{extend} \\ P5 = \text{extend} \\ P6 = \text{clear} \\ P7 = \text{failed} \end{array}\right\} \leftrightarrow \left\{\begin{array}{l} C1A \\ C2A \\ C3B \\ C4B \end{array}\right.$$

S_PM_25

$$\left.\begin{array}{l} P4 = \text{extend} \\ P5 = \text{retract} \\ P6 = \text{clear} \\ P7 = \text{noop} \end{array}\right\} \leftrightarrow \left\{\begin{array}{l} C1A \\ C2B \\ C3B \\ C4D \end{array}\right.$$

S_PM_26

$$\left.\begin{array}{l} P4 = \text{extend} \\ P5 = \text{retract} \\ P6 = \text{clear} \\ P7 = \text{no tag} \end{array}\right\} \leftrightarrow \left\{\begin{array}{l} C1A \\ C2B \\ C3B \\ C4C \end{array}\right.$$

S_PM_27

$$\left.\begin{array}{l} P4 = \text{extend} \\ P5 = \text{retract} \\ P6 = \text{clear} \\ P7 = \text{failed} \end{array}\right\} \leftrightarrow \left\{\begin{array}{l} C1A \\ C2B \\ C3B \\ C4B \end{array}\right.$$

S_PM_29

$$\left.\begin{array}{l} P4 = \text{extend} \\ P5 = \text{retract} \\ P6 = \text{occupy} \\ P7 = \text{noop} \end{array}\right\} \leftrightarrow \left\{\begin{array}{l} C1A \\ C2B \\ C3A \\ C4D \end{array}\right.$$

S_PM_30

$$\left.\begin{array}{l} P4 = \text{extend} \\ P5 = \text{retract} \\ P6 = \text{occupy} \\ P7 = \text{no tag} \end{array}\right\} \leftrightarrow \left\{\begin{array}{l} C1A \\ C2B \\ C3A \\ C4C \end{array}\right.$$

S_PM_31

$$\left\{\begin{array}{l}P4 = \text{extend}\\P5 = \text{retract}\\P6 = \text{occupy}\\P7 = \text{failed}\end{array}\right\} \leftrightarrow \left\{\begin{array}{l}C1A\\C2B\\C3A\\C4B\end{array}\right\}$$

S_PM_32

$$\left\{\begin{array}{l}P4 = \text{extend}\\P5 = \text{retract}\\P6 = \text{occupy}\\P7 = \text{read}\end{array}\right\} \leftrightarrow \left\{\begin{array}{l}C1A\\C2B\\C3A\\C4A\end{array}\right\}$$

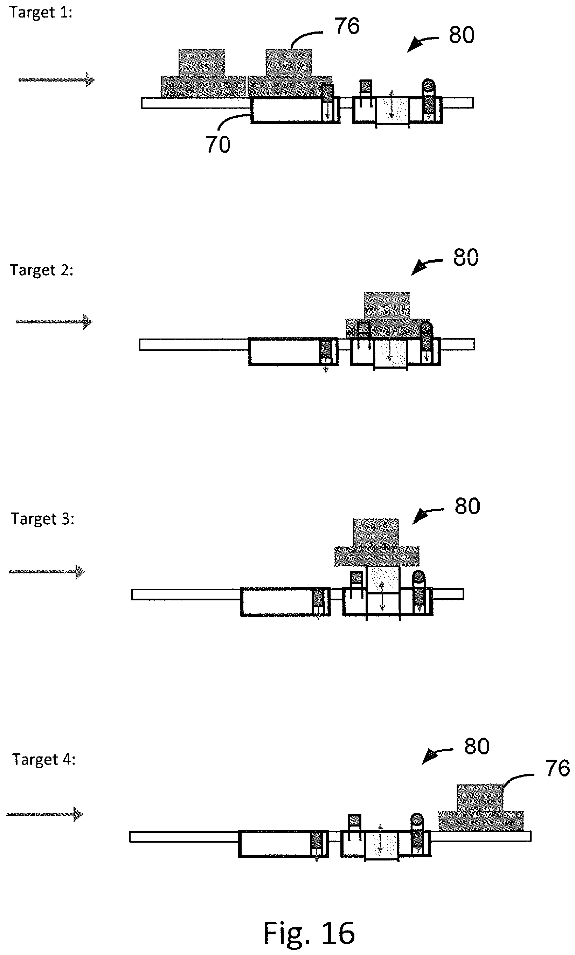

Fig. 16 shows examples of process observation targets for an automized control process generation according to the present invention.

The targets shown in Fig. 16 are specified from a viewpoint on an actual working process on a workpiece and therefore reflect operative conditions on a shopfloor.

As shown in Fig. 16, a first target T1 corresponding to a first process observation target for automated control process generation according to the present invention is that operatively the buffer module 70 is occupied with a workpiece carrier 76 and that a workpiece 78 waits for entry into the processing module 80.

As shown in Fig. 16, a second target T2 corresponding to a second process observation target for automated control process generation according to the present invention is that the workpiece carrier 76 has entered the processing station 80 and that an ID tag on the workpiece 76 is readable.

As shown in Fig. 16, a third target T3 corresponding to a third process observation target for automated control process generation according to the present invention is that the workpiece carrier 76 has been moved by the positioning module 88 to a processing position for processing the workpiece 76 in the processing station 80.

As shown in Fig. 16, a fourth target T4 corresponding to a third process observation target for automated control process generation according to the present invention is that processing on the workpiece carrier 76 has been finished and that the workpiece 76 moves out 88 of the processing station 80.

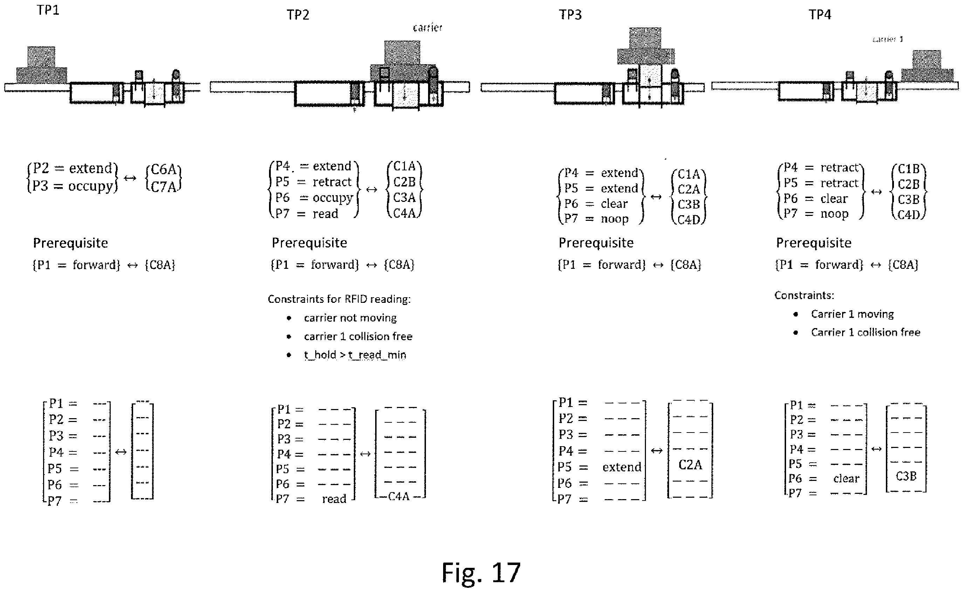

Fig. 17 shows examples of states and related parameters of parametrized functions, constraints, and control process observation targets as specified for an example of automized control process generation according to the present invention.

As shown in Fig. 17, according to the present invention the different targets T1, T2, T3, T4 explained above with respect to Fig. 16 are transformed into a formal representations TP1, TP2, TP3, TP4 of control process observation targets.

As shown in Fig 17, according to the present invention a control process to be generated is specified as a sequence of control process target observations TP1, TP2, TP3, TP4 that are to be reached and to be verified through observation. As automated control process generation relies on observations only for verification of results of control process experiments there is no requirement for a behavioral modelling of a cyber-physical system to controlled.

As shown in Fig 17, according to the present invention a control process to be generated may also be specified in terms of constraints that must be fulfilled when running the generated control process after generation thereof for control of a cyber-physical system.

Here, it should be noted the constraint violations may only be identified during runtime and therefore require execution control process experiments. To put it differently, while constraints may be specified in a static manner the answer whether a constraint is violated or not can only be given by introducing the aspect of variation in time into the automated control process generation as outlined above.

As shown in Fig. 17, the specification of control process observation targets according to the present invention may be achieved through specification of related control process observation target patterns TP1, TP2, TP3, TP4 also referred to as target patterns in the following. Target patters define at least one state or partial state of a cyber-physical object, here, the motion conveyor 68, the buffer module 70, and the processing station 80.

As shown in Fig. 17, when certain states or partial states of a cyber-physical object are not relevant for an automated control process generation related entries in the target patters remain open as don't cares thus increasing degrees of freedom and solution space for automated control process generation.

From the above, the specification of the control process observation targets for the example in consideration are as follows:

Target T1: buffer occupied, workpiece waits for entry

Target state T1:
S_buffer_1

$$\begin{Bmatrix} P2 = \text{extend} \\ P3 = \text{occupy} \end{Bmatrix} \leftrightarrow \begin{Bmatrix} C6A \\ C7A \end{Bmatrix}$$

Prerequisit pattern T1:
S conveyor_1

$$\{P1 = \text{forward}\} \leftrightarrow \{C8A\}$$

Target pattern TP1:

$$\begin{bmatrix} P1 = & - - - \\ P2 = & - - - \\ P3 = & - - - \\ P4 = & - - - \\ P5 = & - - - \\ P6 = & - - - \\ P7 = & - - - \end{bmatrix} \leftrightarrow \begin{bmatrix} - - - \\ - - - \\ - - - \\ - - - \\ - - - \\ - - - \\ - - - \end{bmatrix}$$

Target T2: carrier in station, ID tag readable
Target state T2:
S_PM_32

$$\begin{Bmatrix} P4 = \text{extend} \\ P5 = \text{retract} \\ P6 = \text{occupy} \\ P7 = \text{read} \end{Bmatrix} \leftrightarrow \begin{Bmatrix} C1A \\ C2B \\ C3A \\ C4A \end{Bmatrix}$$

Prerequisit pattern T2:
S_conveyor_1

$$\{P1 = \text{forward}\} \leftrightarrow \{C8A\}$$

Constraints for RFID reading:

- carrier not moving
- carrier 1 collision free
- t_hold > t_read_min

Target pattern TP2:

$$\begin{bmatrix} P1 = & - - - \\ P2 = & - - - \\ P3 = & - - - \\ P4 = & - - - \\ P5 = & - - - \\ P6 = & - - - \\ P7 = & \text{read} \end{bmatrix} \leftrightarrow \begin{bmatrix} - - - \\ - - - \\ - - - \\ - - - \\ - - - \\ - - - \\ - C4A - \end{bmatrix}$$

Target T3: workpiece in process position
Target state T3:
S_PM_17

$$\begin{Bmatrix} P4 = \text{extend} \\ P5 = \text{extend} \\ P6 = \text{clear} \\ P7 = \text{noop} \end{Bmatrix} \leftrightarrow \begin{Bmatrix} C1A \\ C2A \\ C3B \\ C4D \end{Bmatrix}$$

Prerequisit pattern T3:
S conveyor_1

$$\{P1 = \text{forward}\} \leftrightarrow \{C8A\}$$

Target pattern TP3:

$$\begin{bmatrix} P1 = & --- \\ P2 = & --- \\ P3 = & --- \\ P4 = & --- \\ P5 = & \text{extend} \\ P6 = & --- \\ P7 = & --- \end{bmatrix} \leftrightarrow \begin{bmatrix} --- \\ --- \\ --- \\ --- \\ C2A \\ --- \\ --- \end{bmatrix}$$

Target T4: process finished, carrier left station
Target state T4:
S_PM_1

$$\begin{Bmatrix} P4 = \text{retract} \\ P5 = \text{retract} \\ P6 = \text{clear} \\ P7 = \text{noop} \end{Bmatrix} \leftrightarrow \begin{Bmatrix} C1B \\ C2B \\ C3B \\ C4D \end{Bmatrix}$$

Prerequisit pattern T4:
S conveyor_1

$$\{P1 = \text{forward}\} \leftrightarrow \{C8A\}$$

Constraints T4:

- Carrier 1 moving
- Carrier 1 collision free

Target pattern T4:

$$\begin{bmatrix} P1 = & - - - \\ P2 = & - - - \\ P3 = & - - - \\ P4 = & - - - \\ P5 = & - - - \\ P6 = & \text{clear} \\ P7 = & - - - \end{bmatrix} \leftrightarrow \begin{bmatrix} - - - \\ - - - \\ - - - \\ - - - \\ - - - \\ C3B \\ - - - \end{bmatrix}$$

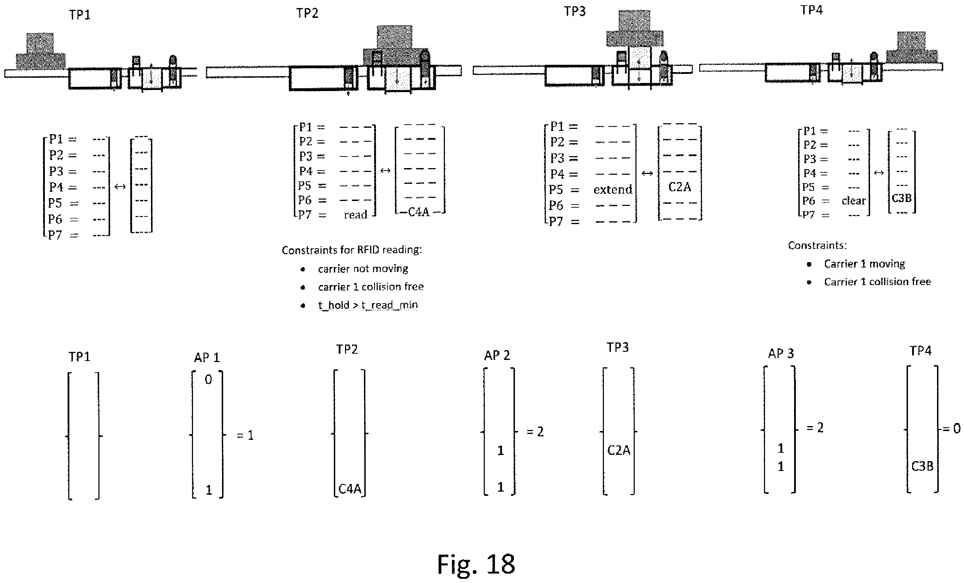

Fig. 18 shows examples for values of artificial potentials in relation to control process observation targets for the example of automized control process generation shown in Fig. 17.

As shown in Fig. 18, the value of the artificial potential varies from control process target observation to control process target observation and only has a value of zero at the end for the last control process target observation TP4.

Further and as will be shown in the following upon violation of at least one constraint a penalty value is added to the value of the artificial potential to terminate a related control process experiment during automated control process generation.

In conclusion, automated control process generation according to the present invention implies operating on target patterns and constraints while evaluating dedicated parameter observations received from the control process test environment. Dedicated parameter observations are the response of the control process test environment to trial parameter variations used to find transitions control process observation targets.

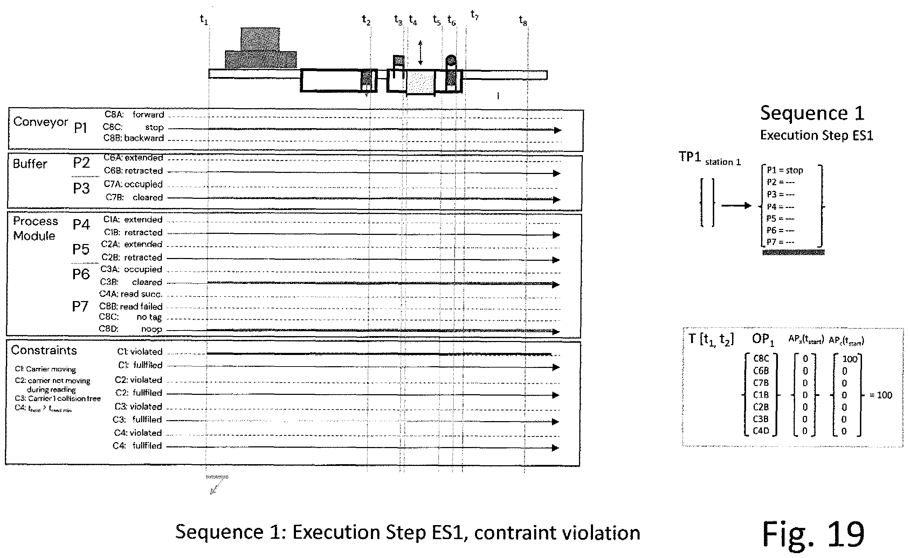

Fig. 19 shows observation of parameters over time for the workpiece processing station shown in Fig. 16 to motivate dynamic parameter over time during control process experiment execution.

As outlined above, the present invention introduces the concept of variation in time into the execution of control process experiments to dynamically explore the implications of parameters variations with respect to a cyber-physical system to be controlled and for a control process to be generated.

As shown in Fig. 19, during execution of a control process experiment there is operated an experiment clock to track dedicated parameter observations over time. Here, a experiment time resolution depends on processing speed within the control process test environment when computing resources are applied therein, e.g., applicable sampling rates. Otherwise, when hardware resources are applied experiment time resolution is determined, e.g., by hardware latency.

As shown in Fig. 19, in a case where parameter P1 is set to P1= conveyor stop and where the motion conveyor 68 is not moving at a time t1 the workpiece carrier 76 will also not move. From this, the buffer proximity sensor 74 and the PM proximity sensor 84 will not see a moving workpiece carrier and related observation patterns remain constant.

As shown in Fig. 19, when the motion conveyor 68 is not moving the result is violation of the constraint C1 that the carrier should be moving at time t1. This leads to a termination of the control process experiment after the first execution step due to a value of 100 for the artificial potential.

As shown in Fig. 19, to align the concept of control process target patters with dedicated control parameter observations it is suggested to represent also the result of every dedicated parameter observation pattern format. E.g., the parameter activation pattern [P1 = stop, P2 = ---, P3 = ---, P4 = ---, P5 = ---, P6 = ---, P7 = ---]$^T$ leads to the observation pattern OP = [C8C, C6B, C7B, C1B, C2B, C3D, C4D]$^T$.

Otherwise, observations may vary over time as can be represented in the scheme according to Fig. 19 by pulse functions having leading and trailing edges corresponding to observation changes. As outlined above, only this allows for examination of constraint violation during control process experiment execution.

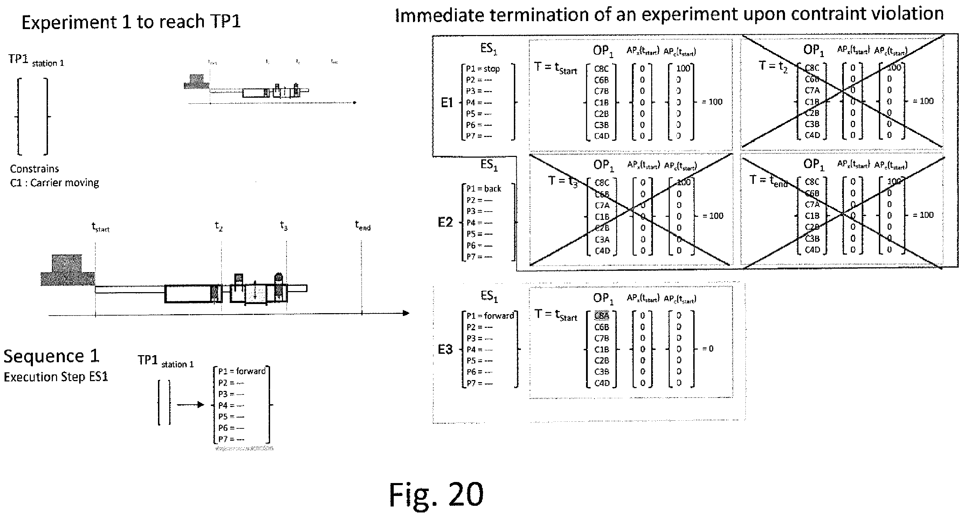

Fig. 20 shows execution of a control process experiment executed to reach the control process target observation TP1 shown in Fig. 17.

As shown in Fig. 20, there are executed three control process experiments E1, E2, E3.

Experiment E2, E3 respectively lead to a violation of the constraint C1 requiring that the carrier should move. The reason for this is that the parameter P1 for movement of the motion conveyor 70 is set to stop for the control process experiment E1 or is set to backward movement for the control process experiment E2. Thus, the part $AP_c$ of the artificial potential AP reflecting constraint violation has a value of 100 and dominates the part $AP_x$ of the artificial potential reflecting for the control process experiment progress.

As shown in Fig. 20, the control process experiment E3 is successful when the parameter P1 for movement of the motion conveyor 70 is set to forward movement. Thus, the artificial potential AP has a value of 0.

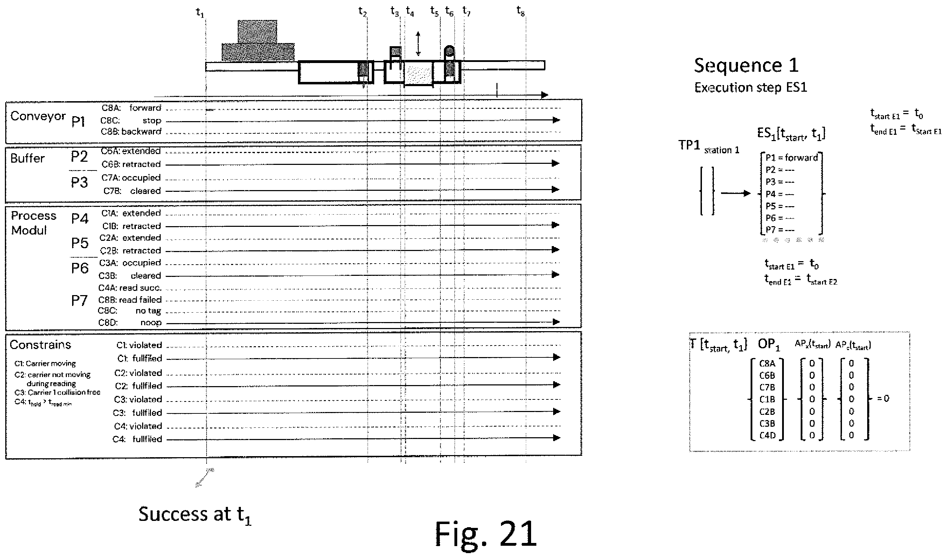

Fig. 21 shows termination of the control process experiment executed to reach the control process target observation TP1 shown in Fig. 17.

As shown in Fig. 21, the result of every control process experiment is a sequence of at least one execution step, here a single execution step ES_1, and a sequence of related parameter activation patterns. Every execution step is related to an activation parameter activation that contributed to a successful termination of the control process experiment.

As shown in Fig. 21, the result of every control experiment process is further a sequence of at least one time interval specifying time the parameter activation pattern corresponding to an execution step in the sequence of execution steps may be applied.

As shown in Fig. 21, the result of every control process experiment is further an indication of a start time and an indication of a termination time of the control process experiment.

As outlined above, generally the start time of a next control process experiment is the termination time of a successful current control process experiment or the start time the current control process experiment when the current control process experiment is repeated with a varied parameter activation pattern.

Further, the termination time of a control process experiment is either maximum time t_max as specified for the control process experiment or a control process execution time when the control process experiment is terminated successfully.

In the following there will be described a sequence of control process experiments towards the final control process observation target TP4 as shown in Fig. 17. Hereby, general aspects of control process execution as explained with respect to the first control process experiment executed to reach the control process target observation TP1 also apply to the succeeding control process experiments repeated.

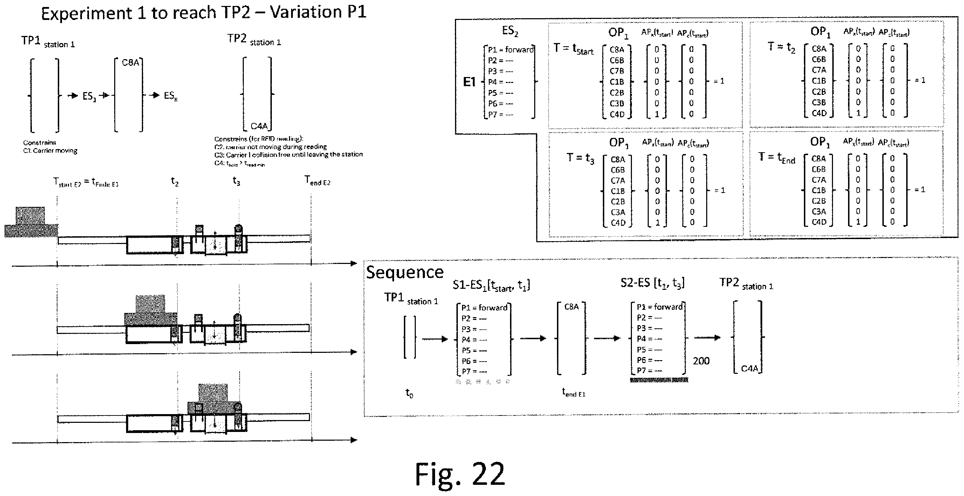

Fig. 22 shows execution of a first control process experiment executed to reach the control process target observation TP2 shown in Fig. 17.

As shown in Fig. 22, subsequent to identification of a first process sequence S1-ES1[t_start, t1] the iteration of control process experiments continues with the subsequent control process observation target TP2 which specifies that the workpiece carrier 76 is in the processing station 80 and an ID tag of the workpiece 76 is readable.

Thus, according to the present invention the iteration process for automated control process generated operates sequence by sequence with respect to every specified control process observation target. Further, with each sequence the iteration process operates control process experiment by control process experiment to identify a activation parameter sequence read the actual control process observation target.

As shown in Fig. 22, a first control process experiment S2-ES_x [t1, t3] is to continue with the last parameter activation pattern of the previous control process experiment. However, to simply continue the movement of the motion conveyor 70 fails as condition C2 that the workpiece carrier 76 should not move during ID tag reading and constraint C4 requiring a minimum reading time $t_{hold} > t_{read\_min}$ are not. This leads to a value of 200 for the artificial constrain.

As shown in Fig. 22 and in the following, a successful parameter activation pattern is underlined by a dotted line and a parameter activation pattern leading to a constraint violation or to an artificial potential value larger than zero is underlined by a bold line.

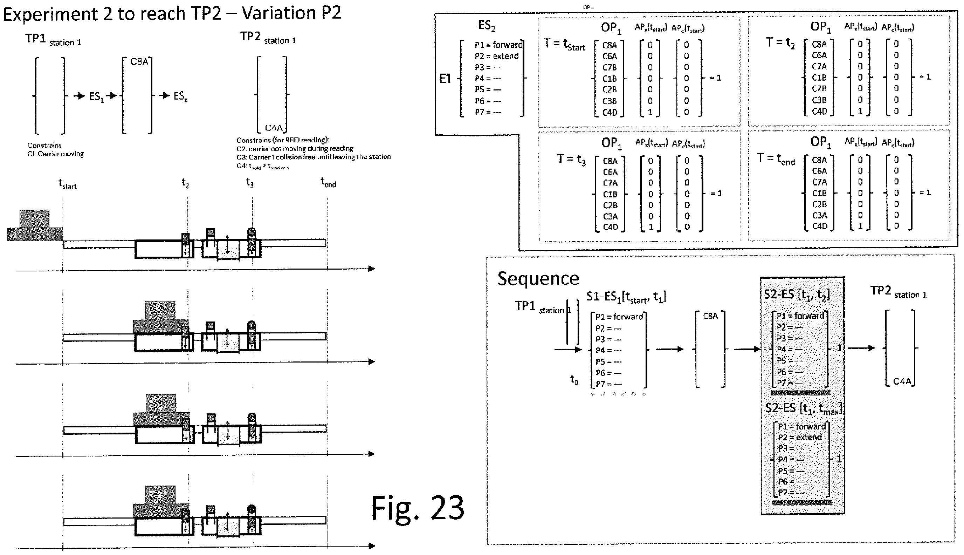

Fig. 23 shows execution of a second control process experiment executed to reach the control process target observation TP2 shown in Fig. 17.

As shown in Fig. 23, a second control process experiment to reach TP2 is to extend the buffer stopper 72 of the buffer module 70. Here, although no constraints are violated the control process experiments fails due to timeout for the reason that the workpiece carrier 76 will never reach the processing station 80.

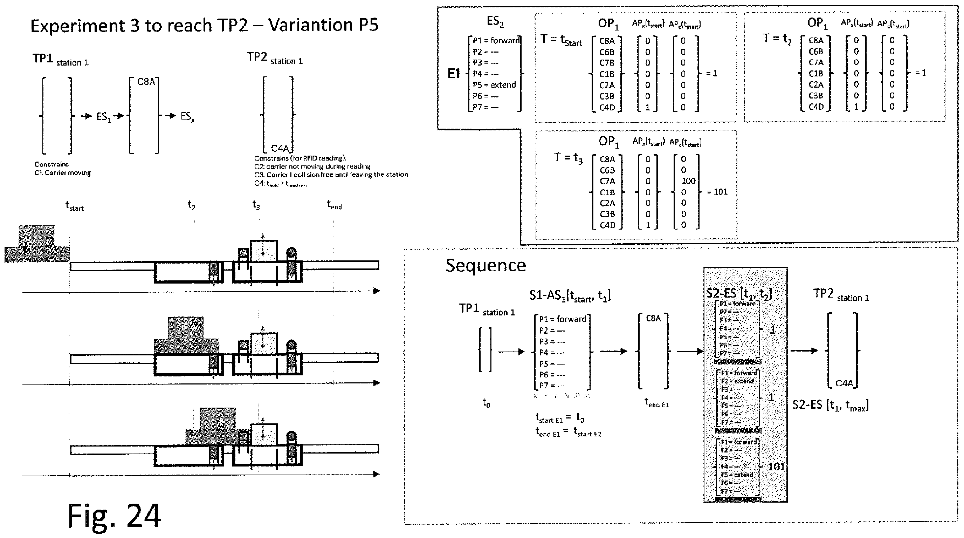

Fig. 24 shows execution of a third control process experiment executed to reach the control process target observation TP2 shown in Fig. 17.

As shown in Fig. 24, a third control process experiment to reach is to keep the PM stopper 86 of the processing module 80 retracted. However, this control process experiments fails due violation of constraint C4 requiring $t_{hold} > t_{read\_min}$ which is not met when the workpiece 76 simply moves through processing station 80.

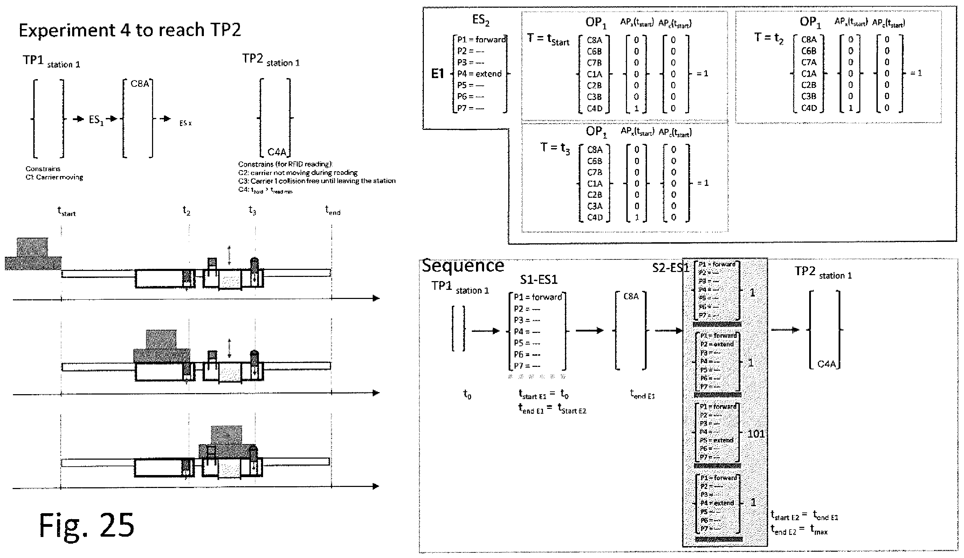

Fig. 25 shows execution of a fourth control process experiment executed to reach the control process target observation TP2 shown in Fig. 17.

As shown in Fig. 25, a fourth control process experiment to reach TP2 is to extend the PM stopper 86 of the processing module 80. Here, although there is no constraint violation the control process experiment terminates with timeout due to undefined parameter P7 in relation to the PM RFID 82 of the processing station 80, see C4D in $OP_1$ at time $t_{start}$, $t_2$, and $t_3$.

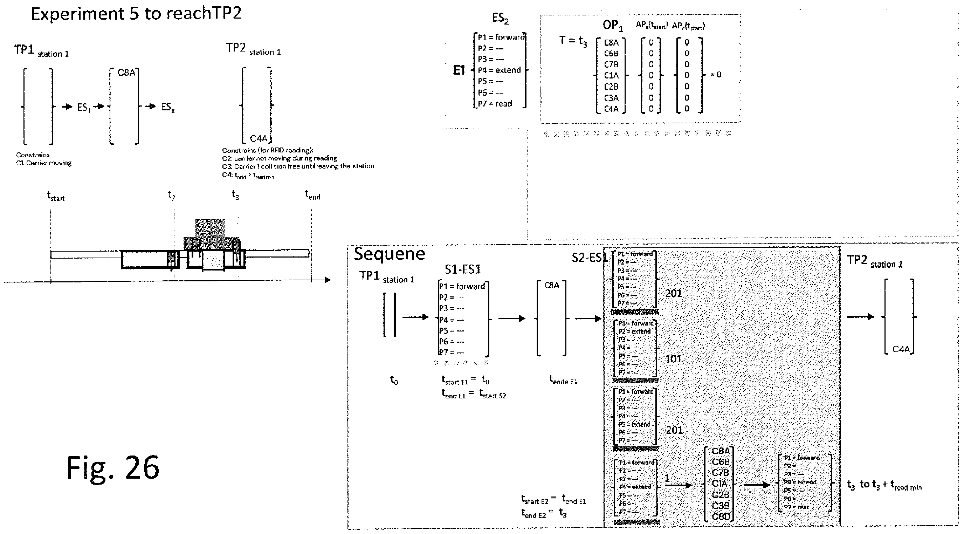

Fig. 26 shows execution of a fifth control process experiment executed to reach the control process target observation TP2 shown in Fig. 17.

As shown in Fig. 26, the fifth control process experiment to reach TP2 is to modify the parameter activation pattern of the fourth experiment by setting the parameter P7 in relation to the PM RFID 82 to read. Thus, the fifth control process experiment is successful after execution thereof over a period of time $\Delta T = t_{read\_min}$ due to the activation of PM RFID 82.

As the fifth control process experiment to reach TP2 is successful the process iteration continues with a new control process observation target TP3 to position the workpiece in the processing module 80.

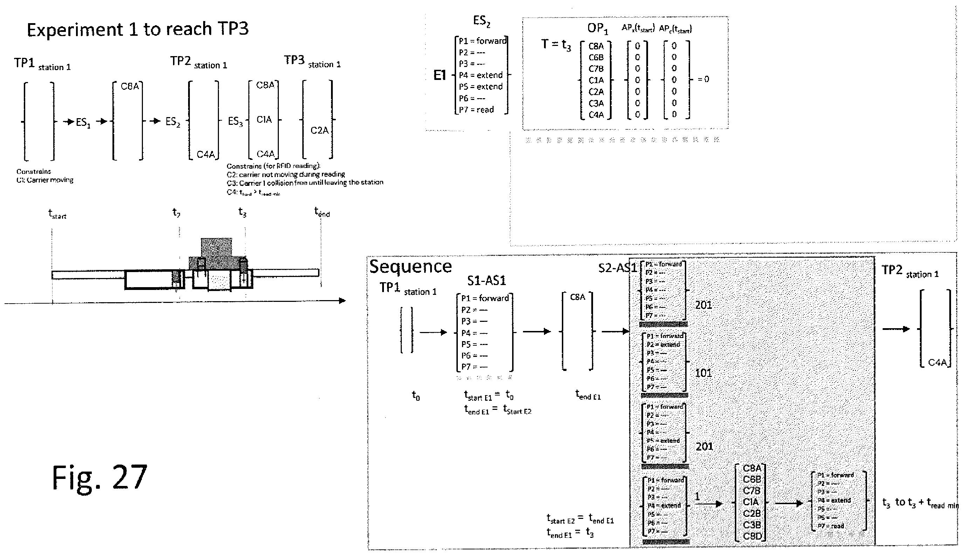

Fig. 27 shows execution of a first control process experiment in executed to reach the control process target observation TP3 shown in Fig. 17.

As shown in Fig. 27, the first control process experiment to reach TP3 is to start with the final parameter activation of the previous control process to reach TP2 and to modify the parameter P5 in relation to positioning module to extend. This directly leads to a successful termination of first control process experiment to reach TP3 so that iteration process continues with the next control process observation target TP4.

It view of the above it should be understood that the iteration process for control process experiments also covers constellations where - under the condition that no constraints are violated - a sequence may be continued even if an intermediate control process experiment terminates with a value of the artificial potential being larger than zero. This also allows to escape local minima and to avoid potential constraint violations.

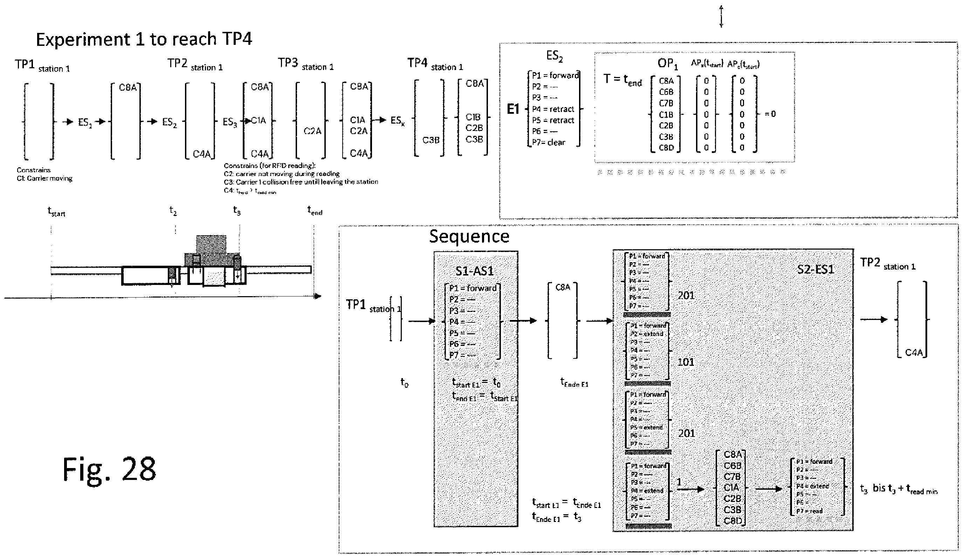

Fig. 28 shows execution of a first control process experiment in executed to reach the control process target observation TP4 shown in Fig. 17, process finished, workpiece carrier left processing module 80.

As shown in Fig. 28, the first control process experiment to reach TP4 is to reset all process station related parameter P4, P5, P7 to default --- after observation C4A for successful PM RFID reading in the preceding control process experiment. The first control process experiment to reach TP4 shows that also a plurality of parameters may be varied in a single execution step of a control process experiment.

As shown in Fig. 28, the first control process experiment to reach TP4 directly leads to a successful termination of first control process experiment to reach TP3. As no further control process target observations are specified the iteration process for control process experiments terminates successfully.

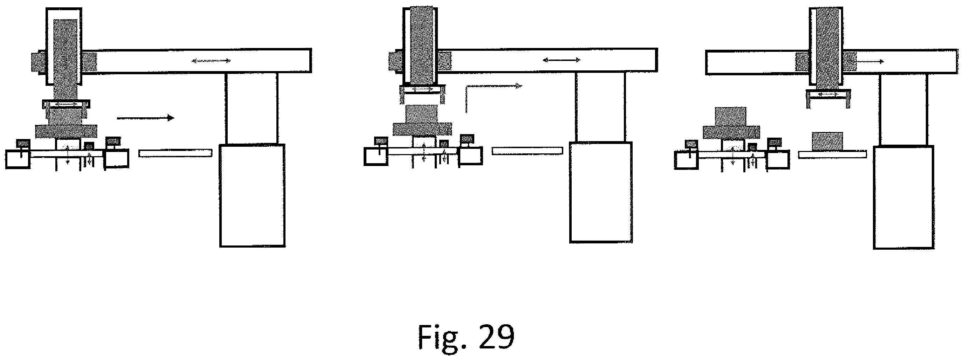

Fig. 29 shows a continuation scenario for a control process experiment that has reached an intermediate control process stage and proceeds that without control process progress to avoid constraint violation.

As shown in Fig. 29, process configuration underlying the continuation scenario is that a workpiece is positioned by a horizontal linear unit and by a vertical linear unit.

As shown on the left of Fig. 29, the workpiece is positioned at the processing position and assuming that a process on the workpiece is finished than a direct movement back to the start position of the horizontal linear unit would remove the workpiece from the processing position what might be undesirable.

As shown in the middle and in the right in Fig. 29, an appropriate way to resolve this issue is to release the grip from the workpiece, move upwards and to the right back into the processing cycle start position for processing of a next workpiece. While this implies a deviation from the shortest path, nevertheless, it leads to a successful termination of the overall control process.

While the present invention has been described with reference to the drawing it should be noted that clearly the present invention may also be implemented using variations and modifications thereof which will be apparent and can be readily made by those skilled in the art without departing from the scope and spirit of the present invention. E.g., functionalities described above may be realized in software, in hardware, or a combination thereof.

Accordingly, it is not intended that the scope of claims appended hereto is limited to the description as set forth herein but rather that the claims should be construed so as to encompass all features of presentable novelty that preside in the present invention, including all features that would be treated as equivalent thereof by those skilled in the art to which the present invention pertains.

## Claims

1. Method of specifying a control process for a cyber-physical system comprising at least one controllable and observable cyber-physical object, wherein at least one functionality of the at least one cyber-physical object is modelled by a parametrized function being assigned to the at least one cyber-physical object and each parameter of the parametrized function represents a degree of freedom for control of the cyber-physical object and has a predetermined value range, the method comprising:

   specifying at least one object observation target the for at least one cyber-physical object as a dedicated parameter observation with respect to at least one parametrized function being assigned to the at least one cyber-physical object;
   specifying at least one control process observation target for the control process by selecting at least one object observation target of at least one cyber-physical object for assignment to the control process observation target; and
   assigning a sequential order onto the at least one control process observation target.

2. Method according to claim 1, comprising a step of specifying a type of observation in relation to at least one control process observation target as a direct object observation target requiring no further processing of a related dedicated parameter observation.

3. Method according to claim 1 or 2, comprising a step of specifying a type of observation in relation to at least one control process observation target as an indirect object observation target requiring a step of logic reasoning on a related dedicated parameter observation.

4. Method according to claim 3, wherein the step of logic reasoning on a related dedicated parameter observation is executed in consideration of at least one further dedicated parameter observation observed in relation to at least one further object observation target.

5. Method according to one of the claims 1 to 4, comprising a step of specifying type of observation for at least one object observation target according to a related observation domain.

6. Method according to claim 5, wherein the type of observation is selected from a group comprising an observation in a virtual environment, an observation in a hardware environment, an observation in a firmware environment, and an observation in a computing environment.

7. Method according to claim 6, wherein the computing environment is selected from a group comprising a geometry engine, a 3D movement simulator, a CAD system modelling at least part of the cyber-physical system, and a computation system for determining kinematic dependencies.

8. Method according to one of the claims 1 to 7, comprising a step of specifying an artificial potential objective function for quantifying a control process experiment progress towards a control process observation target.

9. Method according to claim 8, wherein the step of specifying the artificial potential objective function is to reflect a violation of at least one constraint to be fulfilled during a transition towards a control process observation target.

10. Method according to claim 8 or 9, wherein the step of specifying the artificial potential objective function is to define a cost function for evaluation of different dedicated parameter observation sequences achieving a same control process progress towards a given control process observation target.

11. Method according to one of the claims 8 to 10, comprising a step of defining an attractive potential field as part of the artificial potential objective function to promote a progress towards a given control process observation target due to at least one parameter variation during a control process experiment.

12. Method according to one of the claims 8 to 11, comprising a step of defining a repulsive potential field as part of the artificial potential objective function to avoid a violation of a constraint due to at least one parameter variation during a control process experiment.

13. Method according to one of the claims 1 to 12, comprising a step of specifying at least one constraint in relation to at least one control process observation target to define at least one boundary condition to be fulfilled during a transition to a control process observation target.

14. Method according to claim 13, wherein the area of application of the at least one constraint is related to

a single control process experimental step in a sequence of experimental steps to be executed during a control process experiment for a transition to a control process observation target;
a sequence of control process experimental steps to be executed during a control process experiment for a transition to a control process observation target;
at least one timing constraint in relation to a control process observation target; and/or
at least one parameter of at least one parametrized function assigned to at least one cyber-physical object.

15. Method according to one of the claims 1 to 14, comprising a step of specifying a control process experiment strategy for execution of a control process experiment.

16. Method according to claim 15, wherein at least one cyber-physical object has assigned thereto a behavioral state model set up from states and related state transitions and wherein every state of the behavioral model has assigned thereto at least one dedicated parameter observation according at least one parameter of at least one parametrized function being assigned to the at least one cyber-physical object, the step of specifying a control process experiment strategy comprising:

characterizing a state transition from a source state to a target state in the behavioral model according to a difference in assignment of at least one dedicated parameter observation between the source state and the target state, and

using at least one difference in dedicated parameter observation assignments to define a preferred parameter variation strategy that minimizes a number of parameter variations during a transition from the source state to the target state when a control process experiment starts at a constellation where the at least one cyber-physical object prevails in the start state.

17. Method according to claim 15 or 16, step of specifying a control process experiment strategy comprises a step of specifying a set of at least one parametrized function which is applicable for the execution of a control process experiment.

18. Method according to one of the claims 15 to 17, wherein the step of specifying a control process experiment strategy comprises a step of analyzing dependencies of parameters of at least one parametrized function representing a degree of freedom for control of the cyber-physical object and a step of summarizing dependent parameters into to a set of preferred parameter variations.

19. Method of generating at least one control process instruction for a control process to be generated for a set of controllable and observable cyber-physical objects operated in a cyber-physical system, the method comprising:

selecting at least one control process observation target in the control process as an actual control process observation target;
conducting a control process experiment to promote a transition from an actual control process observation towards the actual control process observation target by execution of at least one control process experimental step to

execute a parameter value variation with respect to at least one parametrized function representing a degree of freedom for control of a cyber-physical object;
submit the at least one parameter value variation to a control process test environment and to receive a dedicated parameter observation in response to the submitted at least one parameter value variation from the control process test environment;
evaluate the dedicated parameter observation with respect to a progress of the control process experiment towards the actual control process observation target using an artificial potential objective function;
generate at least one control process instruction from the parameter value variation upon a progress of the control process experiment; and
control the control process experiment according to a predetermined control process experiment strategy.

20. Method according to claim 19, wherein at least one parameter of at least one parameterized function being assigned to at least one cyber-physical object which is operated in a cyber-physical system is represented in the form of an activation pattern and a related at least one dedicated parameter observation is represented in the form of a related observer pattern.

21. Method according to claim 19 or 20, wherein the step of parameter value variation is executed according to a predetermined parameter value variation strategy being selected from a group comprising a random parameter value variation strategy, a behavioral model driven parameter value variation strategy that uses a behavioral modelling of at least one cyber-physical object to identify parameter value variations that are aligned with the functionality of the at least one cyber-physical object, or a hybrid form of the random parameter value variation strategy and the behavioral model driven parameter value variation strategy.

22. Method according to claim according to one of the claims 19 to 21, comprising a step of static pruning of a parameter variation space prior to execution of the control process experiment to cope with at least one parameter of at least one parametrized function which is not involved in the control process to be generated.

23. Method according to claim according to one of the claims 19 to 22, comprising a step of static pruning of a parameter variation space prior to execution of the control process experiment to cope with at least one parameter value variation that a priori leads to a violation of at least one constraint.

24. Method according to claim according to one of the claims 19 to 23, comprising a step of dynamic pruning the parameter variation space to exclude repetition of at least one parameter value variation showing no progress of the control process experiment towards the actual control process observation target.

25. Method according to claim according to one of the claims 19 to 24, wherein the step of evaluating a dedicated parameter observation uses a direct dedicated parameter observation without further processing of the dedicated parameter observation.

26. Method according to claim 25, wherein the step of evaluating a dedicated parameter observation uses an indirect dedicated parameter observation requiring logic reasoning on a related dedicated parameter observation.

27. Method according to claim 26, wherein the step of logic reasoning is executed in consideration of at least one further dedicated parameter observation observed in relation to at least one further object observation target.

28. Method according to claim according to one of the claims 25 to 27, wherein the step of evaluating a dedicated parameter observation uses a hybrid of a direct dedicated parameter observation and an indirect dedicated parameter observation.

29. Method according to claim to one of the claims 19 to 28, wherein the step of evaluating a dedicated parameter observation is subject to at least one constraint in relation to at least one control process observation target defining at least one boundary condition to be fulfilled during a transition to the control process observation target.

30. Method according to claim 29, wherein the at least one constraint is related to

a single control process experiment step in a sequence of experimental steps to be executed during a control process experiment for to a transition to a control process observation target;
a sequence of control process experiment steps to be executed during a control process experiment for a transition to a control process observation target;
at least one timing constraint in relation to a control process observation target; and/or
at least one parameter of at least one parametrized function assigned to at least one cyber-physical object.

31. Method according to one of the claims 19 to 30, wherein the step of evaluating the dedicated parameter observation comprises

a step of computing an observation dependent progress value according to an attractive potential field of the artificial potential objective function to quantify progress towards the actual control process observation target;
a step of computing an observation dependent constraint value according to a repulsive potential field of the artificial potential objective function to qualify at least one violation of at least one constraint to be fulfilled during a transition towards the actual control process observation target; and
a step of accepting a parameter value variation leading to the dedicated parameter observation as an intermediate result of the control process experiment when the observation dependent progress value is lower than a pre-determined threshold and the observation dependent constraint value fulfills a specified constraint.

32. Method according to claim 31, wherein the step of evaluating the dedicated parameter observation comprises

a step of computing a cost function value for a dedicated parameter observation according to a cost function part of the artificial potential objective function reflecting at least an experimental effort for generation of the dedicated parameter observation; and
a step of selecting a dedicated parameter observation having lowest cost function value from a plurality of dedicated parameter observations having a same observation dependent progress value and having observation dependent constraint values fulfilled related specified constraints.

33. Method according to one of the claims 19 to 32, comprising a step of checking runtime of the control process experiment to identity a timeout of the control process experiment.

34. Method according to one of the claims 19 to 33, wherein the step of generating at least one control process instruction generates at least one control process instruction from at least one parameter value variation stored in a control process experiment memory.

**35.** Method according to claim 34, comprising a step of mapping at least one parameter value variation stored in the control process experiment memory into at least one control process instruction when the actual control process observation corresponds to the actual control process observation target.

**36.** Method according to one of the claims 19 to 35, wherein the step of controlling the control process experiment terminates the control process experiment upon violation of at least one constraint.

**37.** Method according to one of the claims 19 to 35, wherein the step of controlling the control process experiment starts a next the control process experiment when the current control process experiment terminates due to timeout

**38.** Method according to one of the claims 19 to 35, wherein the step of controlling the control process experiment starts a next control process experiment when the actual control process observation corresponds to the actual control process observation target.

**39.** Method according to claim 38, comprising a step of setting a start condition of a next control process experiment according to a control process experiment result of a preceding control process experiment when the preceding control process experiment does not terminate due to a timeout.

**40.** Method according to one of the claims 19 to 35, comprising a step of executing an additional action when the control process experiment does terminate due to a timeout to start the next control process experiment at the start time of the terminated control process experiment.

**41.** Method according to one of the claims 19 to 35, wherein the step of controlling the control process experiment continues the control process experiment at an intermediate control process stage without control process progress to avoid control process constraint violation.

**42.** Method according to one of the claims 19 to 35, wherein the step of controlling the control process experiment restarts the control process experiment when the actual control process observation corresponds to the actual control process observation target for identification of at least one alternative transition from the actual control process observation prevailing at the start of the control process experiment to the control process observation target.

**43.** Method according to one of the claims 19 to 42, wherein a control process observation start target is specified for the control process experiment and the control process experiment is conducted to promote a transition from an actual control process observation towards the control process observation start target.

**44.** Method according to one of the claims 19 to 43, wherein the step of controlling the control process experiment terminates the control process experiment when the actual control process observation corresponds to the final control process observation target.

**45.** Control process specification engine for specifying a control process for a cyber-physical system comprising at least one controllable and observable cyber-physical object, wherein at least one functionality of the at least one cyber-physical object is modelled by a parametrized function being assigned to the at least one cyber-physical object and each parameter of the parametrized function represents a degree of freedom for control of the cyber-physical object and has a predetermined value range, the control process specification engine comprising:

> a target specifying unit adapted to
> specify at least one object observation target the for at least one cyber-physical object as a dedicated parameter observation with respect to at least one parametrized function being assigned to the at least one cyber-physical object;
> specify at least one control process observation target for the control process by selecting at least one object observation target of at least one cyber-physical object for assignment to the control process observation target; and to
> assign a sequential order onto the at least one control process observation target.

**46.** Control process specification engine according to claim 45, comprising an observation specifying unit adapted to specify a type of observation in relation to at least one control process observation target as a direct object observation target requiring no further processing of a related dedicated parameter observation.

**47.** Control process specification engine according to claim 45 or 46, wherein the observation specifying unit is adapted to specify a type of observation in relation to at least one control process observation target as an indirect object observation target requiring logic reasoning on a related dedicated parameter observation.

**48.** Control process specification engine according to 48, wherein the observation specifying unit is adapted to specify execution of the step of logic reasoning on a related dedicated parameter observation in consideration of at least one further dedicated parameter observation observed in relation to at least one further object observation target.

**49.** Control process specification engine according to claim 46 to 48, wherein the observation specifying unit is adapted to specify a type of observation for at least one object observation target according to a related observation domain.

**50.** Control process specification engine according to claim 49, wherein the observation specifying unit is adapted to select the type of observation from a group comprising an observation in a virtual environment, an observation in a hardware environment, an observation in a firmware environment, and an observation in a computing environment.

**51.** Control process specification engine according to claim 50, wherein the observation specifying unit is adapted to select the computing environment from a group comprising a geometry engine, a 3D movement simulator, a CAD system modelling at least part of the cyber-physical system, and a computation system for determining kinematic dependencies.

**52.** Control process specification engine according to one of the claims 45 to 51, comprising an artificial potential specifying unit adapted to specify an artificial potential objective function for quantifying a control process experiment progress towards a control process observation target.

**53.** Control process specification engine according to claim 52, wherein the artificial potential specifying unit is adapted to specify the artificial potential objective function to reflect a violation of at least one constraint to be fulfilled during a transition towards a control process observation target.

**54.** Control process specification engine according to claim 52 or 53, wherein the artificial potential specifying unit is adapted to specify the artificial potential objective function to define a cost function for evaluation of different dedicated parameter observation sequences achieving a same control process progress towards a given control process observation target.

**55.** Control process specification engine according to one of the claims 52 to 54, wherein the artificial potential specifying unit is adapted to define an attractive potential field as part of an artificial potential objective function to promote a progress towards a given control process observation target due to at least one parameter variation during a control process experiment.

**56.** Control process specification engine according to according to one of the claims 52 to 55, wherein the artificial potential specifying unit is adapted to define a repulsive potential field as part of the artificial potential objective function to avoid a control process constraint violation due to at least one parameter variation during a control process experiment.

**57.** Control process specification engine according to one of the claims 45 to 56, comprising a constraint specifying unit adapted to specify at least one constraint in relation to at least one control process observation target to define at least one boundary condition to be fulfilled during a transition to a control process observation target.

**58.** Control process specification engine according to claim 57, wherein the constraint specifying is unit adapted to relate an area of application of the at least one constraint to

a single control process experiment step in a sequence of experimental steps to be executed during a control process experiment for a transition to a control process observation target;
a sequence of control process experiment steps to be executed during a control process experiment for a transition to a control process observation target;
at least one timing constraint in relation to a control process observation target; and/or
at least one parameter of at least one parametrized function assigned to at least one cyber-physical object.

**59.** Control process specification engine according to one of the claims 45 to 58, comprising a control process experiment strategy specifying unit adapted to specify a control process experiment strategy for execution of a control process experiment.

60. Control process specification engine according to claim 59, wherein at least one cyber-physical object has assigned thereto a behavioral state model set up from states and related state transitions and wherein every state of the behavioral model has assigned thereto at least one dedicated parameter observation according to at least one parameter of at least one parametrized function being assigned to the at least one cyber-physical object, the control process experiment strategy specifying unit being adapted to

characterize a state transition from a source state to a target state in the behavioral model according to a difference in assignment of at least one dedicated parameter observation between the source state and the target state, and to
use differences in dedicated parameter observation assignments to define a preferred parameter variation strategy that minimizes a number of parameter variations during a transition from the source state to the target state when a control process experiment starts at a constellation where the at least one cyber-physical object prevails in the start state.

61. Control process specification engine according to claim 59 or 60, wherein the control process experiment strategy specifying unit is adapted to specify a set of at least one parametrized function which is applicable for the execution of a control process experiment.

62. Control process specification engine according to according to one of the claims 59 to 61, wherein the control process experiment strategy specifying unit is adapted to analyze dependencies of parameters of at least one parametrized function representing a degree of freedom for control of the cyber-physical object and is adapted to summarize dependent parameters into to a set of preferred parameter variations.

63. Control process experiment execution machine for generating at least one control process instruction for a control process to be generated for a set of controllable and observable cyber-physical objects operated in a cyber-physical system, the control process experiment execution machine comprising:

an observation target selection unit adapted to select at least one control process observation target in the control process as an actual control process observation target;
a parameter variation unit adapted to execute a parameter value variation with respect to at least one parametrized function representing a degree of freedom for control of a cyber-physical object;
a control process test environment interface adapted to submit the at least one parameter value variation to a control process test environment and adapted to receive a dedicated parameter observation in response to the at least one parameter value variation from the control process test environment;
an experiment controller adapted to control a control process experiment executing at least one control process experimental step to promote a transition from an actual control process observation towards the actual control process observation target, experiment controller having

an experiment evaluation unit adapted to evaluate the dedicated parameter observation with respect to a progress of the control process experiment towards the actual control process observation target using an artificial potential objective function;
a control process instruction generating unit adapted to generate at least one control process instruction from the parameter value variation upon a progress of the control process experiment; and
an experiment control unit adapted to control the control process experiment according to a predetermined control process experiment strategy.

64. Control process experiment execution machine according to claim 63, wherein the parameter variation unit is adapted to represent at least one parameter of at least one parameterized function being assigned to at least one cyber-physical object which is operated in a cyber-physical system in the form of an activation pattern and is adapted to represent a related at least one dedicated parameter observation in the form of a corresponding observer pattern.

65. Control process experiment execution machine according to claim 63 or 64, wherein the parameter variation unit is adapted to execute a parameter value variation according to a predetermined parameter value variation strategy being selected from a group comprising a random parameter value variation strategy, a behavioral model driven parameter value variation strategy that uses a behavioral modelling of at least one cyber-physical object to identify parameter value variations that are aligned with the functionality of the at least one cyber-physical object, or a hybrid form of the random parameter value variation strategy and the behavioral model driven parameter value variation strategy.

66. Control process experiment execution machine according to one of the claims 63 to 65, wherein the parameter variation unit is adapted to statically prune a parameter variation space prior to execution of the control process experiment to cope with at least one parameter of at least one parametrized function which is not involved in the control process to be generated.

67. Control process experiment execution machine according to one of the claims 63 to 66, wherein the parameter variation unit is adapted to statically prune a parameter variation space prior to execution of the control process experiment to cope with at least one parameter value variation that a priori leads to a violation of at least one control process constraint.

68. Control process experiment execution machine according to one of the claims 63 to 67, wherein the parameter variation unit is adapted to dynamically prune the parameter variation space to exclude repetition of at least one parameter value variation showing no progress of the control process experiment towards the actual control process observation target.

69. Control process experiment execution machine according to one of the claims 63 to 68, wherein the experiment evaluation unit comprises an observation evaluation unit adapted to evaluate a dedicated parameter observation using a direct dedicated parameter observation without further processing of the dedicated parameter observation.

70. Control process experiment execution machine according to one of the claims 64 to 69, wherein the observation evaluation unit is adapted to evaluate a dedicated parameter observation using an indirect dedicated parameter observation requiring logic reasoning on a related dedicated parameter observation.

71. Control process experiment execution machine according to claim 70, wherein the observation evaluation unit is adapted to execute the logic reasoning in consideration of at least one further dedicated parameter observation observed in relation to at least one further object observation target.

72. Control process experiment execution machine according to one of the claims 69 to 71, wherein the observation evaluation unit is adapted to use a hybrid of a direct dedicated parameter observation and an indirect dedicated parameter observation.

73. Control process experiment execution machine according to one of the claims 63 to 72, wherein the experiment evaluation unit comprises a constraint evaluation unit adapted to evaluate a dedicated parameter observation subject to at least one constraint in relation to at least one control process observation target defining at least one boundary condition to be fulfilled during a transition to the control process observation target.

74. Control process experiment execution machine according to claim 73, wherein the constraint evaluation unit is adapted to relate the at least one constraint is to

a single control process experiment step in a sequence of experimental steps to be executed during a control process experiment for a transition to a control process observation target;
a sequence of control process experiment steps to be executed during a control process experiment for a transition to a control process observation target;
at least one timing constraint in relation to a control process observation target; and/or
at least one parameter of at least one parametrized function assigned to at least one cyber-physical object.

75. Control process experiment execution machine according to 73 or 74, wherein

the observation evaluation unit is adapted to compute an observation dependent progress value according to an attractive potential field of the artificial potential objective function to quantify progress towards the actual control process observation target;
the constraint evaluation unit is adapted to compute an observation dependent constraint value according to a repulsive potential field of the artificial potential objective function to qualify at least one violation of at least one constraint to be fulfilled during a transition towards the actual control process observation target; and

the experiment control unit is adapted to accept a parameter value variation leading to a dedicated parameter observation as an intermediate result of the control process experiment when the related observation dependent progress value is lower than a predetermined threshold and the related observation dependent constraint value fulfills a specified constraint.

76. Control process experiment execution machine according to one of the claims 73 to 75, wherein

the observation evaluation unit is adapted to compute a cost function value for a dedicated parameter observation according to a cost function part of the artificial potential objective function reflecting at least an experimental effort for generation of the dedicated parameter observation; and

the experiment control unit is adapted to select a dedicated parameter observation having lowest cost function value from a plurality of dedicated parameter observations having a same observation dependent progress value and having observation dependent constraint values fulfilling related specified constraints.

77. Control process experiment execution machine according to one of the claims 63 to 76, wherein the experiment evaluation unit comprises an experiment clock adapted to check a runtime of the control process experiment to identity a timeout of the control process experiment.

78. Control process experiment execution machine according to one of the claims 63 to 77, wherein the control process instruction generation unit is adapted to generate at least one control process instruction from at least one parameter value variation stored in a control process experiment memory upon a progress of the control process experiment.

79. Control process experiment execution machine according to claim 78, wherein the control process instruction generation unit is adapted to map at least one parameter value variation stored in the control process experiment memory into at least one control process instruction when the actual control process observation corresponds to the actual control process observation target.

80. Control process experiment execution machine according to one of the claims 63 to 79, wherein experiment control unit comprises an experiment termination unit adapted to terminate the control process experiment upon violation of at least one constraint.

81. Control process experiment execution machine according to one of the claims 63 to 79, wherein experiment control unit comprises an experiment continuation unit adapted to start a next the control process experiment when the current control process experiment terminates due to timeout.

82. Control process experiment execution machine according to one of the claims 63 to 79, wherein the experiment continuation unit is adapted to start a next control process experiment when the actual control process observation corresponds to the actual control process observation target.

83. Control process experiment execution machine according to one of the claims 63 to 79, wherein the experiment continuation unit is adapted to set a start condition of a next control process experiment according to a control process experiment result of a preceding control process experiment when the preceding control process experiment does not terminate due to a timeout.

84. Control process experiment execution machine according to one of the claims 63 to 79, wherein the experiment continuation unit is adapted to execute an additional action when the control process experiment does terminate due to a timeout to start a next control process experiment at the starting time of the terminated control process experiment.

85. Control process experiment execution machine according to one of the claims 63 to 79, wherein the experiment continuation unit is adapted to continue the control process experiment at an intermediate control process stage without control process progress to avoid control process constraint violation.

86. Control process experiment execution machine according to one of the claims 63 to 79, wherein the experiment continuation unit is adapted to restart the control process experiment when the actual control process observation corresponds to the actual control process observation target for identification of at least one alternative transition from the actual control process observation prevailing at the start of the control process experiment to the control process observation target.

87. Control process experiment execution machine according to one of the claims 63 to 79, wherein a control process observation start target is specified for the control process experiment and the experiment control unit is adapted to conduct the control process experiment to promote a transition from an actual control process observation towards the control process observation start target.

88. Control process experiment execution machine according to one of the claims 63 to 79, the control process termination unit is adapted to terminate the control process experiment when the actual control process observation corresponds to the final control process observation target.

$$OP\_O := \begin{bmatrix} PO\_1\_1 \\ \vdots \\ PO\_1\_n1 \\ \vdots \\ PO\_i1 \\ \vdots \\ PO\_ini \\ \vdots \\ PO\_m\_1 \\ \vdots \\ PO\_m\_nm \end{bmatrix}$$

Controllable
&
Observable
Cyber-Physical Object

$$AP\_O := \begin{bmatrix} F\_1 := [PA\_1\_1 \ \dots \ PA\_1\_n1] \\ \vdots \\ F\_i := [PA\_Pi\_1 \ \dots \ PA\_ini] \\ \vdots \\ F\_m := [PA\_m\_1 \ \dots \ PA\_m\_nm] \end{bmatrix}$$

Artifical Potential & Constraints

Fig. 1

36

10

# Control Process Specification Engine

12

## Target Specifying Unit

16

### Object Observation Target

18

| CPO | | · · · · · · · · · · · | CPO | |

20

### Process Observation Target

22

14

## Control Process Experiment Specifying Unit

# Fig. 2

S10

Specify at least one object observation target for the at least one cyber-physical object

S12

Specify at least one control process observation target by selecting at least one object observation target for assignment thereto

S14

Assign sequential order onto the at least one control process observation target

S16

Specify Execution of Control Process Experiment (Optional)

Fig. 3

**Control Process Experiment Specifying Unit** — 14

**Observation Specifying Unit** — 24

**Artificial Potential Specifying Unit** — 26

**Constraint Specifying Unit** — 28

**Control Process Experiment Strategy Specifying Unit** — 30

Fig. 4

S18

Specify a type of observation in relation to dedicated parameter observations

S20

Specify an artificial potential objective function for quantifying a control process experiment progress

S22

Specify at least one constraint in relation to at least one control process observation target

S24

Specify strategy for execution of a control process experiment

Fig. 5

State Assignment of Parameters

Behavioral Model of Object

$p\char`^\_m$

$p\char`^\_i$

$p\char`^\_1$

Fig. 6

EP 4 428 636 A2

Fig. 7

Fig. 8

Fig. 9

S26

Select at least one control process observation target

S28

Execute a parameter value variation with respect to at least one parametrized function

S30

Submit parameter value variation to control process test environment and receive related dedicated parameter observation

S32

Control the control process experiment: evaluate dedicated parameter observation, generate at least one control process instruction, excute control according to predetermined strategy

Fig. 10

48

**Experiment Controller**

52

**Control Process Instruction Generation Unit**

56

50

**Experiment Evaluation Unit**

**Observation Evaluation Unit** 58

**Constraint Evaluation Unit** 60

**Experiment Clock** 62

54

**Experiment Control Unit**

**Experiment Continuation Unit** 64

**Experiment Termination Unit** 66

Fig. 11

Fig. 12

EP 4 428 636 A2

68

Fig. 13

72

74

70

76    78    74

72

Fig. 14

88

86

82    84

80

76    78

86

88

Fig. 15

Target 1:

Target 2:

Target 3:

Target 4:

Fig. 16

TP1                    TP2              carrier                TP3                              TP4              carrier 1

$\begin{Bmatrix} P2 = \text{extend} \\ P3 = \text{occupy} \end{Bmatrix} \leftrightarrow \begin{Bmatrix} C6A \\ C7A \end{Bmatrix}$   $\begin{Bmatrix} P4 = \text{extend} \\ P5 = \text{retract} \\ P6 = \text{occupy} \\ P7 = \text{read} \end{Bmatrix} \leftrightarrow \begin{Bmatrix} C1A \\ C2B \\ C3A \\ C4A \end{Bmatrix}$   $\begin{Bmatrix} P4 = \text{extend} \\ P5 = \text{extend} \\ P6 = \text{clear} \\ P7 = \text{noop} \end{Bmatrix} \leftrightarrow \begin{Bmatrix} C1A \\ C2A \\ C3B \\ C4D \end{Bmatrix}$   $\begin{Bmatrix} P4 = \text{retract} \\ P5 = \text{retract} \\ P6 = \text{clear} \\ P7 = \text{noop} \end{Bmatrix} \leftrightarrow \begin{Bmatrix} C1B \\ C2B \\ C3B \\ C4D \end{Bmatrix}$

Prerequisite             Prerequisite           Prerequisite          Prerequisite

{P1 = forward} ↔ {C8A}   {P1 = forward} ↔ {C8A}   {P1 = forward} ↔ {C8A}   {P1 = forward} ↔ {C8A}

                         Constraints for RFID reading:                      Constraints:
                         • carrier not moving                               • Carrier 1 moving
                         • carrier 1 collision free                         • Carrier 1 collision free
                         • t_hold > t_read_min

$\begin{bmatrix} P1 = & --- \\ P2 = & --- \\ P3 = & --- \\ P4 = & --- \\ P5 = & --- \\ P6 = & --- \\ P7 = & --- \end{bmatrix} \leftrightarrow \begin{bmatrix} --- \\ --- \\ --- \\ --- \\ --- \\ --- \\ --- \end{bmatrix}$   $\begin{bmatrix} P1 = & --- \\ P2 = & --- \\ P3 = & --- \\ P4 = & --- \\ P5 = & --- \\ P6 = & --- \\ P7 = & \text{read} \end{bmatrix} \leftrightarrow \begin{bmatrix} --- \\ --- \\ --- \\ --- \\ --- \\ --- \\ -C4A- \end{bmatrix}$   $\begin{bmatrix} P1 = & --- \\ P2 = & --- \\ P3 = & --- \\ P4 = & --- \\ P5 = & \text{extend} \\ P6 = & --- \\ P7 = & --- \end{bmatrix} \leftrightarrow \begin{bmatrix} --- \\ --- \\ --- \\ --- \\ C2A \\ --- \\ --- \end{bmatrix}$   $\begin{bmatrix} P1 = & --- \\ P2 = & --- \\ P3 = & --- \\ P4 = & --- \\ P5 = & --- \\ P6 = & \text{clear} \\ P7 = & --- \end{bmatrix} \leftrightarrow \begin{bmatrix} --- \\ --- \\ --- \\ --- \\ --- \\ C3B \\ --- \end{bmatrix}$

Fig. 17

EP 4 428 636 A2

Fig. 18

| Conveyor P1 | C8A: forward |
| | C8C: stop |
| | C8B: backward |

| Buffer | P2 | C6A: extended |
| | | C6B: retracted |
| | P3 | C7A: occupied |
| | | C7B: cleared |

| Process Module | P4 | C1A: extended |
| | | C1B: retracted |
| | P5 | C2A: extended |
| | | C2B: retracted |
| | P6 | C3A: occupied |
| | | C3B: cleared |
| | P7 | C4A: read succ. |
| | | C8B: read failed |
| | | C8C: no tag |
| | | C8D: noop |

**Constraints**

C1: Carrier moving
C2: carrier not moving during reading
C3: Carrier 1 collision free
C4: $t_{hold} > t_{read\ min}$

| C1: violated |
| C1: fullfiled |
| C2: violated |
| C2: fullfiled |
| C3: violated |
| C3: fullfiled |
| C4: violated |
| C4: fullfiled |

**Sequence 1**
Execution Step ES1

TP1 station 1

$$\begin{bmatrix} P1 = stop \\ P2 = --- \\ P3 = --- \\ P4 = --- \\ P5 = --- \\ P6 = --- \\ P7 = --- \end{bmatrix}$$

$T [t_1, t_2] \quad OP_1 \quad AP_x(t_{start}) \quad AP_c(t_{start})$

$$\begin{bmatrix} C8C \\ C6B \\ C7B \\ C1B \\ C2B \\ C3B \\ C4D \end{bmatrix} \begin{bmatrix} 0 \\ 0 \\ 0 \\ 0 \\ 0 \\ 0 \\ 0 \end{bmatrix} \begin{bmatrix} 100 \\ 0 \\ 0 \\ 0 \\ 0 \\ 0 \\ 0 \end{bmatrix} = 100$$

Sequence 1: Execution Step ES1, contraint violation

Fig. 19

Fig. 20

EP 4 428 636 A2

EP 4 428 636 A2

$t_1$  $t_2$  $t_3$  $t_4$  $t_5$  $t_6$  $t_7$  $t_8$

| Conveyor | P1 | C8A: forward |
|---|---|---|
| | | C8C: stop |
| | | C8B: backward |

| Buffer | P2 | C6A: extended |
|---|---|---|
| | | C6B: retracted |
| | P3 | C7A: occupied |
| | | C7B: cleared |

| Process Modul | P4 | C1A: extended |
|---|---|---|
| | | C1B: retracted |
| | P5 | C2A: extended |
| | | C2B: retracted |
| | P6 | C3A: occupied |
| | | C3B: cleared |
| | | C4A: read succ. |
| | P7 | C8B: read failed |
| | | C8C: no tag |
| | | C8D: noop |

| Constrains | | C1: violated |
|---|---|---|
| | | C1: fullfiled |
| C1: Carrier moving | | C2: violated |
| C2: carrier not moving during reading | | C2: fullfiled |
| C3: Carrier 1 collision free | | C3: violated |
| C4: $t_{hold} > t_{read min}$ | | C3: fullfiled |
| | | C4: violated |
| | | C4: fullfiled |

Success at $t_1$

## Fig. 21

## Sequence 1
### Execution step ES1

$t_{start\ E1} = t_0$
$t_{end\ E1} = t_{start\ E1}$

TP1 station 1     $ES_1[t_{start},\ t_1]$

$$\begin{bmatrix} P1 = forward \\ P2 = --- \\ P3 = --- \\ P4 = --- \\ P5 = --- \\ P6 = --- \\ P7 = --- \end{bmatrix}$$

$t_{start\ E1} = t_0$
$t_{end\ E1} = t_{start\ E2}$

$T[t_{start},\ t_1]$  $OP_1$  $AP_x(t_{start})$  $AP_c(t_{start})$

$$\begin{bmatrix} C8A \\ C6B \\ C7B \\ C1B \\ C2B \\ C3B \\ C4D \end{bmatrix} \begin{bmatrix} 0 \\ 0 \\ 0 \\ 0 \\ 0 \\ 0 \\ 0 \end{bmatrix} \begin{bmatrix} 0 \\ 0 \\ 0 \\ 0 \\ 0 \\ 0 \\ 0 \end{bmatrix} = 0$$

Experiment 1 to reach TP2 – Variation P1

Fig. 22

Fig. 23

Fig. 24

Fig. 25

Fig. 26

Experiment 5 to reachTP2

Fig. 27

EP 4 428 636 A2

Fig. 28

Fig. 29